(19) Europäisches Patentamt
European Patent Office
Office européen des brevets

(11) EP 4 408 902 B1

(12) EUROPEAN PATENT SPECIFICATION

(45) Date of publication and mention of the grant of the patent:
**03.09.2025 Bulletin 2025/36**

(21) Application number: **21810274.7**

(22) Date of filing: **30.09.2021**

(51) International Patent Classification (IPC):
***C08F 265/06*** (2006.01) ***C08L 51/00*** (2006.01)
***C09D 151/00*** (2006.01)

(52) Cooperative Patent Classification (CPC):
(C-Sets available)
**C09D 151/003; C08F 265/06; C08L 51/003** (Cont.)

(86) International application number:
**PCT/CN2021/122065**

(87) International publication number:
**WO 2023/050262 (06.04.2023 Gazette 2023/14)**

(54) **AQUEOUS DISPERSION OF MULTISTAGE POLYMERIC PARTICLES**

WÄSSRIGE DISPERSION AUS MEHRSTUFIGEN POLYMERPARTIKELN

DISPERSION AQUEUSE DE PARTICULES POLYMÈRES OBTENUES EN PLUSIEURS ÉTAPES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.08.2024 Bulletin 2024/32**

(73) Proprietors:
- **Dow Global Technologies LLC**
  **Midland, MI 48674 (US)**
- **Rohm and Haas Company**
  **Collegeville, PA 19426 (US)**

(72) Inventors:
- **YANG, Xiaohong**
  **Shanghai 201203 (CN)**
- **WANG, Jinfei**
  **Shanghai 201203 (CN)**
- **ZHOU, Li**
  **Shanghai 201203 (CN)**
- **ZHAO, Juan**
  **Shanghai 201203 (CN)**

(74) Representative: **Jewell, Catherine Mary**
**Beck Greener LLP**
**Fulwood House**
**12 Fulwood Place**
**London WC1V 6HR (GB)**

(56) References cited:
**CN-A- 108 164 638**
**US-A1- 2021 023 868**
**US-A1- 2021 292 455**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 265/06, C08F 220/04, C08F 220/10, C08F 220/58;**
**C08F 265/06, C08F 220/10;**
**C08F 265/06, C08F 220/14, C08F 220/1804, C08F 220/1808, C08F 220/58**

## Description

FIELD

The present invention relates to an aqueous dispersion of multistage polymeric particles and a process for preparing the same.

INTRODUCTION

Aqueous or waterborne coating compositions are becoming increasingly more important than solvent-based coating compositions for less environmental problems. The coating industry is always interested in developing coating compositions without or with substantially reduced or low volatile organic compounds (VOCs), for example, by reducing the dosage of coalescents. One common approach is to reduce the dosage of coalescents of a coating composition to less than 2% by weight based on the coating composition weight, which typically requires aqueous polymer binders in the coating composition having a minimum film formation temperature (MFFT) sufficient low to form films at room temperature, for example, less than 35 degree Celsius (°C). Reducing glass transition temperatures of polymer binders can give decreased MFFT but usually hurts hardness and early block resistance of coating films made therefrom. Waterborne coatings usually need to have an early block resistance of at least C-0 according to the GB/T 23982-2009 standard so as to increase production efficiency and avoid potential coatings' damages when separating two coated surfaces that are stacked or placed in contact with one another during storage, packaging and/or shipping. Waterborne coatings in many wood applications such as in kitchens, bathrooms and dining tables are also required to have excellent water resistance and alcohol resistance both rated 4 to meet industry requirements. The water resistance, alcohol resistance, and early block resistance properties are, however, usually incompatible with each other. Therefore, it is often challenging for wood coatings to achieve a satisfactory balance of these properties. For example US 2021/292455 A1 describes an aqueous coating composition with improved anti-corrosion property and good water resistance and block resistance.

It is desirable to discover an aqueous polymer dispersion with the desirable MFFT that provides coating films without the aforementioned problems.

SUMMARY

The present invention solves the problem of discovering an aqueous dispersion that can be used in an aqueous coating composition without the aforementioned problems. The aqueous dispersion comprising multistage polymeric particles that can be prepared by a multistage free-radical polymerization process. The process for preparing the aqueous dispersion can provide the aqueous dispersion with reduced coagulum. The aqueous coating composition comprising such aqueous dispersion provides coatings made therefrom with excellent alcohol resistance with a rating of 4 or higher while achieving water resistance rated as 4 or higher, both as measured according to GB/T 4893.1-2005, a pencil hardness of 2B or harder as measured according GB/T 23999-2009 standard, and an early block resistance level of C-0 or better as measured according to the GB/T 23982-2009 (further details provided in the Examples section below).

In a first aspect, the present invention is an aqueous dispersion comprising multistage polymeric particles and optionally a polyfunctional carboxylic hydrazide containing at least two hydrazide groups per molecule, wherein the multistage polymeric particles are prepared by a multistage free-radical polymerization process comprising: (i) preparing a first polymer by a free-radical polymerization, followed by neutralizing the first polymer to a pH value of greater than 7.1; and (ii) preparing a second polymer in the presence of the neutralized first polymer obtained from step (i), to obtain the multistage polymeric particles comprising the first polymer and the second polymer at a weight ratio of the first polymer to the second polymer of from 27:73 to 60:40;

wherein the first polymer comprises, by weight based on the weight of the first polymer,
from 6% to 18% of structural units of an acid monomer, a salt thereof, or mixtures thereof;
from 1.1% to 5% of structural units of a monoethylenically unsaturated silane functional monomer;
from zero to 10% of structural units of diacetone (meth)acrylamide;
greater than 0.5% of structural units of a multifunctional monomer containing two or more different ethylenically unsaturated polymerizable groups, and
60% or more of structural units of an additional monoethylenically unsaturated nonionic monomer selected from a $C_1$ to $C_2$ alkyl ester of (meth)acrylic acid, a hydroxyalkyl (meth)acrylate, or mixtures thereof;
wherein the second polymer comprises, by weight based on the weight of the second polymer,
from zero to less than 0.5% of structural units of an acid monomer, a salt thereof, or mixtures thereof;
from zero to 10% of structural units of diacetone (meth)acrylamide; and
structural units of a monoethylenically unsaturated nonionic monomer that does not bear an ionic charge between

pH=1-14 and that is other than the diacetone (meth)acrylamide; and
wherein the second polymer has a glass transition temperature of from -25 to 10 °C, and the first polymer has a glass transition temperature of at least 50 °C higher than that of the second polymer;
provided that at least one of the first polymer and the second polymer comprises structural units of the diacetone (meth)acrylamide and the total concentration of structural units of the diacetone (meth)acrylamide is 1.1% or more, by weight based on the weight of the multistage polymeric particles.

In a second aspect, the present invention is a process for preparing the aqueous dispersion of the first aspect by multistage free-radical polymerization. The process comprises: (i) preparing the first polymer by free-radical polymerization, followed by neutralizing the first polymer to a pH value of greater than 7.1; (ii) preparing the second polymer by free-radical polymerization, in the presence of the neutralized first polymer obtained from step (i), to obtain the multistage polymeric particles; and optionally, admixing the multistage polymeric particles with a polyfunctional carboxylic hydrazide containing at least two hydrazide groups per molecule.
In a third aspect, the present invention is an aqueous coating composition comprising the aqueous dispersion of the first aspect.

DETAILED DESCRIPTION

Test methods refer to the most recent test method as of the priority date of this document when a date is not indicated with the test method number. References to test methods contain both a reference to the testing society and the test method number. The following test method abbreviations and identifiers apply herein: GB/T refers to China National Standard.
Products identified by their tradename refer to the compositions available under those tradenames on the priority date of this document. "And/or" means "and, or as an alternative". All ranges include endpoints unless otherwise indicated.
"Acrylic" includes (meth)acrylic acid, alkyl (meth)acrylate, (meth)acrylamide, (meth)acrylonitrile and their modified forms such as hydroxyalkyl (meth)acrylate. Throughout this document, the word fragment "(meth)acryl" refers to both "methacryl" and "acryl". For example, (meth)acrylic acid refers to both methacrylic acid and acrylic acid, and methyl (meth)acrylate refers to both methyl methacrylate and methyl acrylate.
"Structural units", also known as polymerized units, of the named monomer refers to the remnant of the monomer after polymerization, or the monomer in polymerized form. For example, a structural unit of methyl methacrylate is as illustrated:

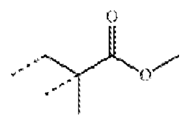

where the dotted lines represent the points of attachment of the structural unit to the polymer backbone.
"Aqueous" composition or dispersion means that particles dispersed in an aqueous medium. By "aqueous medium" herein is meant water and from 0 to 30%, by weight based on the weight of the medium, of water-miscible compound(s) such as, for example, alcohols, glycols, glycol ethers, glycol esters, and the like.
"Glass transition temperature" (Tg) can be measured by various techniques including, for example, differential scanning calorimetry (DSC) or calculation by using the following equation. The particular values of Tg of the multistage polymeric particles reported herein are those calculated by using the following equation (I),

$$Tg(P_M) = w(M_1) * Tg(M_1) + w(M_2) * Tg(M_2) \quad (I)$$

wherein $Tg(P_M)$ is the glass transition temperature of multistage polymeric particles, $w(M_1)$ is the weight fraction of monomer $M_1$ in the multistage polymeric particles, $w(M_2)$ is the weight fraction of monomer $M_2$ in the multistage polymeric particles, $T_g(M_1)$ is the linear glass transition temperature of the homopolymer of monomer $M_1$, and $T_g(M_2)$ is the linear glass transition temperature of the homopolymer of monomer $M_2$, all temperatures being in K. The linear Tgs of homopolymers of commonly used monomers are listed in the below:

| Monomer | Linear Tg (°C) | Monomer | Linear Tg (°C) | Monomer | Linear Tg (°C) |
|---|---|---|---|---|---|
| Acrylic acid | 110 | Vinyl acetate | 33 | Styrene | 83 |

(continued)

| Monomer | Linear Tg (°C) | Monomer | Linear Tg (°C) | Monomer | Linear Tg (°C) |
|---|---|---|---|---|---|
| Methacrylic acid | 155 | Methyl methacrylate | 83 | i-Bornyl methacrylate | 120 |
| Methyl acrylate | 13 | Hydroxyethyl methacrylate | 55 | Ureido methacrylate | 100 |
| Itaconic acid | 155 | Butyl acrylate | -45 | Ethyl methacrylate | 55 |
| Ethyl acrylate | -17 | i-Butyl methacrylate | 48 | Butyl methacrylate | 20 |
| Acrylamide | 165 | Ethylhexyl acrylate | -65 | Phosphoethyl methacrylate | 100 |
| Acrylonitrile | 140 | Lauryl methacrylate | -54 | Diacetone acrylamide | 85 |

"Multistage polymeric particles" herein means polymeric particles prepared by the sequential addition of two or more different monomer compositions. The multistage polymeric particles comprise at least two polymers, a first polymer and a second polymer. By "first polymer" and "second polymer" herein are meant two polymers having different compositions and are formed in different stages of a multistage free-radical polymerization process, that is, the first polymer is formed first, and the second polymer is formed in the presence of the first polymer. However, the first polymer may be formed in the presence of a previously formed dispersed polymer in an amount of 0-10%, by weight based on the weight of the first polymer, sometimes known as a seed polymer, of a composition the same as or different from that of the first polymer. One or more additional stages may be formed before or after the first- or second polymer but they shall not constitute in totality more than 25% by weight of the total weight of the first and second polymers. Neither the weight nor composition of any seed polymer or any additional stage(s) polymer shall be included in the weight, composition, molecular weight, or calculated Tgs of the first polymer or the second polymer.

The first polymer and/or the second polymer in the multistage polymeric particles, and preferably, the first polymer, may each independently comprise structural units of one or more acid monomer, one or more salt thereof, or mixtures thereof. The acid monomer and/or salt thereof is selected from an $\alpha$, $\beta$-ethylenically unsaturated carboxylic acid, a phosphorous-containing acid monomer or a salt thereof, or mixtures thereof. Examples of suitable $\alpha$, $\beta$-ethylenically unsaturated carboxylic acids include an acid-bearing monomer such as acrylic acid (AA), methacrylic acid (MAA), itaconic acid, and fumaric acid; or a monomer bearing an acid-forming group which yields or is subsequently convertible to, such an acid group (such as anhydride, (meth)acrylic anhydride, or maleic anhydride); or mixtures thereof. Phosphorous-containing acid monomers can be ethylenically unsaturated phosphorous acid-containing monomers including, for example, dihydrogen phosphate esters of an alcohol in which the alcohol contains or is substituted with a polymerizable vinyl or olefinic group. Suitable phosphorous acid-containing monomers and salts thereof may include, for example, phosphoalkyl (meth)acrylates such as phosphoethyl (meth)acrylate, phosphopropyl (meth)acrylate, phosphobutyl (meth) acrylate, salts of phosphoalkyl (meth)acrylates, or mixtures thereof; $CH_2=C(R)-C(O)-O-(R_pO)_n-P(O)(OH)_2$, wherein R=H or $CH_3$ and $R_p$=alkyl, n is from 1 to 20, such as SIPOMER PAM-100, SIPOMER PAM-200, SIPOMER PAM-300, and SIPOMER PAM-4000 all available from Solvay; phosphoalkoxy (meth)acrylates such as phospho ethylene glycol (meth) acrylate, phospho di-ethylene glycol (meth)acrylate, phospho tri-ethylene glycol (meth)acrylate, phospho propylene glycol (meth)acrylate, phospho di-propylene glycol (meth)acrylate, phospho tri-propylene glycol (meth)acrylate, allyl ether phosphate, salts thereof, or mixtures thereof. Preferred ethylenically unsaturated phosphorous acid-containing monomers and salts thereof are selected from phosphoethyl (meth)acrylate, phosphopropyl (meth)acrylate, phosphobutyl (meth)acrylate, salts thereof, or mixtures thereof; and more preferably, phosphoethyl methacrylate (PEM). The first polymer in the multistage polymeric particles may comprise structural units of the acid monomer and salt thereof at a concentration of from 6% to 18%, and can be 6% or more, 6.2% or more, 6.5% or more, 6.8% or more, 7% or more, 7.2% or more, 7.5% or more, 7.8% or more, 8% or more, 8.2% or more, 8.5% or more, 8.8% or more, 9% or more, 9.2% or more, 9.5% or more, 9.8% or more, or even 10% or more, while at the same time is generally at a concentration of 18% or less, 17% or less, 16% or less, 15% or less, 14.5% or less, 14% or less, 13.5% or less, 13% or less, 12.5% or less, 12% or less, 11.5% or less, 11% or less, or even 10.5% or less, by weight based on the weight of the first polymer. The second polymer in the multistage polymeric particles may comprise structural units of the acid monomer and salt thereof at a concentration of from zero to less than 0.5%, and can be 0.45% or less, 0.4% or less, 0.35% or less, 0.3% or less, 0.25% or less, 0.2% or less, 0.15% or less, 0.1% or less, 0.05% or less, or even zero, by weight based on the weight of the second polymer.

The first polymer and/or the second polymer in the multistage polymeric particles may each independently comprise structural units of diacetone (meth)acrylamide, and preferably, diacetone acrylamide (DAAM). The first polymer may comprise structural units of diacetone (meth)acrylamide at a concentration of zero or more, and can be 0.5% or more, 0.8% or more, 1% or more, 1.2% or more, 1.3% or more, 1.4% or more, 1.5% or more, 1.6% or more, 1.7% or more, 1.8% or more, 1.9% or more, 2.0% or more, 2.2% or more, 2.5% or more, 2.8% or more, 3% or more, 3.2% or more, or even 3.5% or

more, while at the same time is generally at a concentration of 10% or less, and can be 9.5% or less, 9% or less, 8.5% or less, 8% or less, 7.5% or less, 7% or less, 6.5% or less, 6% or less, 5.5% or less, 5% or less, 4.5% or less, or even 4% or less, by weight based on the weight of the first polymer. The second polymer may comprise structural units of diacetone (meth)acrylamide at a concentration of zero or more, and can be 0.5% or more, 0.8% or more, 1.0% or more, 1.1% or more, 1.2% or more, 1.3% or more, 1.4% or more, 1.5% or more, 1.6% or more, 1.7% or more, 1.8% or more, 1.9% or more, 2.0% or more, 2.2% or more, 2.4% or more, 2.5% or more, 2.8% or more, or even 3.0% or more, while at the same time is generally at a concentration of 10% or less, and can be 9.5% or less, 9% or less, 8.5% or less, 8% or less, 7.5% or less, 7% or less, 6.5% or less, 6% or less, 5.5% or less, 5% or less, 4.5% or less, or even 4% or less, by weight based on the weight of the second polymer. At least one of the first polymer and the second polymer, for example, the first polymer alone, the second polymer alone, or both of the first polymer and second polymer, comprises structural units of diacetone (meth) acrylamide. The total concentration of structural units of diacetone (meth)acrylamide in the multistage polymeric particles can be 1.1% or more, and can be 1.2% or more, 1.3% or more, 1.4% or more, 1.5% or more, 1.6% or more, 1.7% or more, 1.8% or more, 2.0% or more, or even 2.2% or more, while at the same time is generally at a concentration of 10% or less, and can be 9% or less, 8% or less, 7% or less, 6% or less, 5% or less, and can be less than 5%, 4.9% or less, 4.8% or less, 4.7% or less, 4.6% or less, 4.5% or less, 4.4% or less, 4.3% or less, 4.2% or less, 4.1% or less, 4% or less, 3.9% or less, 3.8% or less, 3.7% or less, 3.6% or less, 3.5% or less, 3.4% or less, 3.3% or less, 3.2% or less, or even 3.15% or less, by weight based on the weight of the multistage polymeric particles (e.g., based on the total weight of the first polymer and second polymer).

The first polymer and/or the second polymer in the multistage polymeric particles, and preferably, the first polymer, may each independently comprise structural units of one or more multifunctional monomer containing two or more different ethylenically unsaturated polymerizable groups. The two or more different ethylenically unsaturated polymerizable groups usually have different reactivity. Each of the ethylenically unsaturated polymerizable groups may be selected from one of but different categories (i), (ii), (iii) and (iv): (i) an acryl group, (ii) a methacryl group, (iii) an allyl group ($H_2C=CH-CH_2-$), and (iv) an additional ethylenically unsaturated group that is other than (i), (ii), and (iii). The acryl group may be an acryloxy group or an acrylamino group. The methacryl group may include a methacryloxy group or a methacrylamino group. The additional ethylenically unsaturated group may include a vinyl group, a maleate group, a crotyl group, or a dicyclopentenyl group. Preferably, the multifunctional monomer contains at least one allyl group and at least one acryl or methacryl group. Suitable multifunctional monomers may include, for example, allyl (meth)acrylate, allyl (meth)acrylamide, allyl oxyethyl (meth)acrylate, crotyl (meth)acrylate, dicyclopentenyl (meth)acrylate, dicyclopentenyl ethyl (meth)acrylate, diallyl maleate, or mixtures thereof. Preferably, the multifunctional monomer is allyl methacrylate. The first polymer may comprise structural units of the multifunctional monomer at a concentration of greater than 0.5%, and can be 0.6% or more, 0.7% or more, 0.8% or more, 0.9% or more, or even 1.0% or more, while at the same time is generally at a concentration of 5% or less, and can be 4.9% or less, 4.8% or less, 4.7% or less, 4.6% or less, 4.5% or less, 4.4% or less, 4.3% or less, 4.2% or less, 4.1% or less, 4% or less, 3.9% or less, 3.8% or less, 3.7% or less, 3.6% or less, 3.5% or less, 3.4% or less, 3.3% or less, 3.2% or less, 3.1% or less, 3.0% or less, 2.8% or less, 2.5% or less, 2.4% or less, 2.3% or less, 2.2% or less, 2.1% or less, 2.0% or less, 1.9% or less, 1.8% or less, 1.7% or less, 1.6% or less, 1.5% or less, 1.4% or less, 1.3% or less, 1.2% or less, or even 1.1% or less, by weight based on the weight of the first polymer. The second polymer may comprise structural units of the multifunctional monomer or be free of structural units of the multifunctional monomer. The concentration of structural units of the multifunctional monomer in the second polymer may be in a range of from zero to 2.0%, and can be less than 2.0%, less than 1.8%, less than 1.5%, less than 1.2%, less than 1.0%, less than 0.8%, less than 0.5%, less than 0.3%, less than 0.2%, less than 0.1%, less than 0.08%, less than 0.05%, less than 0.04%, less than 0.02%, less than 0.01%, or even zero, by weight based on the weight of the second polymer. Structural units of the multifunctional monomer in the multistage polymeric particles may be present at a total concentration of 0.135% or more, 0.15% or more, 0.18% or more, 0.2% or more, 0.22% or more, 0.25% or more, 0.28% or more, or even 0.3% or more, while at the same time is generally 3.8% or less, 3.5% or less, 3% or less, 2.5% or less, 2% or less, 1.5% or less, 1% or less, and can be less than 1%, 0.9% or less, 0.8% or less, 0.7% or less, 0.6% or less, or even 0.5% or less, by weight based on the weight of the multistage polymeric particles.

The first polymer and/or the second polymer in the multistage polymeric particles, and preferably, the first polymer, may each independently comprise structural units of one or more monoethylenically unsaturated silane functional monomer. The monoethylenically unsaturated silane functional monomer can be a (meth)acryl functional silane such as a (meth)acryloxyalkyltrialkoxysilane, a vinyl silane such as a vinyltrialkoxysilane, or mixtures thereof. The vinyl silane may have the structure of formula (II):

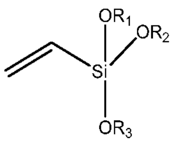

(II)

where $R_1$, $R_2$ and $R_3$ are each independently selected from $CH_3$, $CH_2CH_3$, $CH_2CH_2CH_3$, $CH(CH_3)_2$, $CH_2CH_2CH_2CH_3$ or its isomers, or combinations thereof.

The (meth)acryl functional silane may have the structure of formula (III):

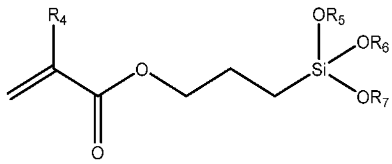

(III)

where $R_4$ is H or $CH_3$, $R_5$, $R_6$ and $R_7$ are each independently selected from $CH_3$, $CH_2CH_3$, $CH_2CH_2CH_3$, $CH(CH_3)_2$, $CH_2CH_2CH_2CH_3$ or its isomers, or combinations thereof.

The monoethylenically unsaturated silane functional monomer useful in the present application may comprise any one or any combination of more than one type of monomer selected from vinyltrimethoxy silane, vinyltriethoxy silane, vinyltriproxy silane, gamma-methacryloxypropyltrimethoxysilane, methacryloxypropyltriethoxysilane, 3-methacryloxypropylmethyldimethoxysilane, 3-methacryloxypropyltrimethoxysilane, 3-methacryloxypropyltriethoxysilane, or mixtures thereof. The first polymer may comprise structural units of the monoethylenically unsaturated silane functional monomer at a concentration of 1.1% or more, and can be 1.2% or more, 1.3% or more, 1.4% or more, 1.5% or more, 1.6% or more, 1.7% or more, 1.8% or more, 1.9% or more, 2.0% or more, 2.2% or more, 2.4% or more, or even 2.5% or more, while at the same time is generally at a concentration of 5% or less, and can be 4.5% or less, 4.0% or less, 3.5% or less, 3.0% or less, 2.8% or less, 2.7% or less, 2.6% or less, 2.5% or less, 2% or less, or even 1.5% or less, by weight based on the weight of the first polymer. The second polymer may comprise or be free of structural units of the monoethylenically unsaturated silane functional monomer at a concentration of zero or more, and can be 0.03% or more, 0.05% or more, 0.08% or more, 0.1% or more, 0.2% or more, 0.3% or more, 0.4% or more, or even 0.5% or more, while at the same time is generally at a concentration of 2% or less, and can be 1.5% or less, 1.2% or less, 1.1% or less, 1.0% or less, 0.9% or less, 0.8% or less, or even 0.7% or less, and preferably, less than 1%, less than 0.8%, less than 0.5%, less than 0.3%, less than 0.2%, less than 0.1%, or even zero, by weight based on the weight of the second polymer. The multistage polymeric particles may comprise structural units of the monoethylenically unsaturated silane functional monomer at a total concentration of 0.27% or more, 0.3% or more, 0.35% or more, 0.4% or more, 0.45% or more, 0.5% or more, and can be greater than 0.5%, 0.55% or more, 0.58% or more, or even 0.6% or more, while at the same time is generally 3.8% or less, 3.5% or less, 3% or less, 2.8% or less, 2.5% or less, 2.2% or less, 2% or less, 1.8% or less, 1.5% or less, 1.2% or less, 1% or less, or even 0.8% or less, by weight based on the weight of the multistage polymeric particles.

The first polymer in the multistage polymeric particles of the present invention may comprise structural units of one or more additional monoethylenically unsaturated nonionic monomer selected from a $C_1$ to $C_2$ alkyl esters of (meth) acrylic acid, a hydroxyalkyl (meth)acrylate, or mixtures thereof. "Nonionic monomer" refers to a monomer that does not bear an ionic charge between pH=1-14. The $C_1$ to $C_2$ alkyl ester of (meth)acrylic acid refers to alkyl esters of (meth)acrylic acid having alkyl with 1 to 2 carbon atoms and comprises methyl acrylate, methyl methacrylate, ethyl acrylate, ethyl methacrylate, or mixtures thereof. Suitable hydroxyalkyl (meth)acrylates may include, for example, hydroxyethyl (meth) acrylates such as 2-hydroxyethyl acrylate, 2-hydroxyethyl methacrylate, or mixtures thereof; hydroxypropyl (meth) acrylates such as 2-hydroxypropylacrylate, 2-hydroxypropyl methacrylate, 3-hydroxypropyl acrylate, 3-hydroxypropyl methacrylate, or mixtures thereof; hydroxybutyl (meth)acrylates such as 3-hydroxybutyl acrylate, 3-hydroxybutyl methacrylate, 4-hydroxybutyl acrylate, 4-hydroxybutyl methacrylate, or mixtures thereof; 6-hydroxyhexyl acrylate; 6-hydroxyhexylmethacrylate; 3-hydroxy-2-ethylhexyl acrylate; 3-hydroxy-2-ethylhexyl methacrylate; or mixtures thereof. Desirably, the hydroxyalkyl (meth)acrylate is selected from include 2-hydroxyethyl acrylate, 2-hydroxyethyl methacrylate, 3-hydroxypropyl acrylate, 3-hydroxypropyl methacrylate, or mixtures thereof. Preferably, the additional monoethylenically unsaturated nonionic monomer comprises methyl methacrylate, ethyl acrylate, or mixtures thereof. The first polymer may comprise, by weight based on the weight of the first polymer, structural units of the additional monoethylenically unsaturated nonionic monomer at a concentration of 60% or more, and can be 62% or more, 65% or more, 66% or more, 67% or more, 68% or more, 70% or more, 72% or more, 75% or more, 76% or more, 77% or more, 78% or more, 78.5% or more, 79% or more, or even 80% or more, while at the same time is generally at a concentration of 92.3% or less, and can be 92% or less, 91% or less, 90% or less, 89% or less, 88% or less, 87.9% or less, 87.5% or less, 87% or less, or even 86% or less.

The second polymer useful in the present invention comprises structural units of one or more monoethylenically unsaturated nonionic monomer that is other than the diacetone (meth)acrylamide and the monoethylenically unsaturated silane functional monomer. The monoethylenically unsaturated nonionic monomer may comprise any one or any combination of more than one type of monomer selected from alkyl esters of (meth)acrylic acids, vinyl aromatic monomers such as styrene and substituted styrene, vinyl esters of carboxylic acid, (meth)acrylamide, or mixtures thereof. The alkyl

esters of (meth)acrylic acids may include the $C_1$-$C_2$ alkyl esters of (meth)acrylic acids described above such as methyl (meth)acrylate $C_3$-$C_{20}$ alkyl esters of (meth)acrylic acids alkyl ester, or mixtures thereof. Suitable alkyl esters of (meth) acrylic acids including, for example, methyl (meth)acrylate, ethyl acrylate, butyl (meth)acrylate, 2-ethylhexyl acrylate, iso-butyl (meth)acrylate, hexyl (meth)acrylate, lauryl (meth)acrylate, stearyl (meth)acrylate, cyclohexyl (meth)acrylate, benzyl(meth)acrylate, oleyl(meth)acrylate, palmityl (meth)acrylate, nonyl(meth)acrylate, decyl (meth)acrylate, dodecyl (meth)acrylate, pentadecyl (meth) acrylate, hexadecyl (meth)acrylate, octadecyl (meth)acrylate, hydroxyethyl (meth) acrylate, or hydroxypropyl (meth)acrylate, or mixtures thereof. Preferably, the monoethylenically unsaturated nonionic monomer is selected from 2-ethylhexyl acrylate, butyl (meth)acrylate, methyl (meth)acrylate, or mixtures thereof. The second polymer may comprise, by weight based on the weight of the second polymer, structural units of the monoethylenically unsaturated nonionic monomer at a concentration of 87.5% or more, 88% or more, 89% or more, 90% or more, 91% or more, 92% or more, 92.5% or more, 93% or more, or even 93.4% or more, while at the same time is generally 100% or less, 99% or less, or even 98% or less.

Preferably, the first polymer in the multistage polymeric particles comprises, by weight based on the weight of the first polymer, from 8% to 15% of structural units of the acid monomer and salt thereof, from 2% to 6% of structural units of diacetone (meth)acrylamide, from 0.8% to 1.5% of structural units of the multifunctional monomer, from 1.3% to 2.5% of structural units of the monoethylenically unsaturated silane functional monomer, and from 75% to 87.9% of structural units of the additional monoethylenically unsaturated nonionic monomer.

Preferably, the second polymer in the multistage polymeric particles comprises, by weight based on the weight of the second polymer, from zero to 0.3% of structural units of the acid monomer and salt thereof, from 2% to 6% of structural units of diacetone (meth)acrylamide, from zero to 0.3% of the multifunctional monomer, and from 93.4% to 98% of structural units of the monoethylenically unsaturated nonionic monomer.

The first polymer and the second polymer in the multistage polymeric particles may be present at a weight ratio of the first polymer to second polymer in a range of from 27:73 to 60:40, and can be 28:72 or more, 29:71 or more, or even 30:70 or more, while at the same time is 60:40 or less, 59:41 or less, 58:42 or less, 57:43 or less, 56:44 or less, 55:45 or less, 54:46 or less, 53:47 or less, 52:48 or less, 51:49 or less, 50:50 or less, 49:51 or less, 48:52 or less, or even 45:55 or less. The multistage polymeric particles can be two-stage polymeric particles, consisting of the first polymer and the second polymer.

The multistage polymeric particles of the present invention may comprise multiple different phases or layers, which are formed by at least the first polymer and the second polymer. The multistage polymeric particles may comprise two layers such as an inner layer of the second polymer and an outer layer of the first polymer. The second polymer may be as the core and the first polymer as the shell, of the multistage polymeric particles.

Types and levels of the monomers described above may be chosen to provide the multistage polymeric particles with a Tg suitable for different applications. For example, the second polymer in the multistage polymeric particles may have a Tg of from -25 °C or more, and can be -22 °C or more, -20°C or more, -18 °C or more, -15 °C or more, -12 °C or more, -10 °C or more, -8 °C or more, or even -7 °C or more, while at the same time is generally 10 °C or less, and can be 9 °C or less, 8 °C or less, 7 °C or less, 6 °C or less, 5 °C or less, 4 °C or less, or even 3 °C or less. The first polymer in the multistage polymeric particles may have a Tg of at least 50 °C higher than that of the second polymer, and can be 55 °C or more, 60 °C or more, 65 °C or more, 70 °C or more, 75 °C or more, 80 °C or more, 85 °C or more, 90 °C or more, 95 °C or more, 100 °C or more, 105 °C or more, or even 110 °C or more, than that of the second polymer. Tgs are calculated by the equation (I) described above.

The multistage polymeric particles in the aqueous dispersion of the present invention may have an average particle size of 50 nanometers (nm) or more, and can be 80 nm or more, 90 nm or more, or even 100 nm or more, while at the same time is generally 500 nm or less, and can be 450 nm or less, 400 nm or less, 300 nm or less, 250 nm or less, or even 200 nm or less. The particle size herein refers to the number average particle size and may be measured by a Brookhaven BI-90 Plus Particle Size Analyzer (further details provided under Particle Size Measurement).

In addition to the multistage polymeric particles, the aqueous dispersion of the present invention may comprise one or more polyfunctional carboxylic hydrazide containing at least two hydrazide groups per molecule. The polyfunctional carboxylic hydrazide may act as a crosslinker and may be selected from adipic dihydrazide, oxalic dihydrazide, isophthalic dihydrazide, polyacrylic polyhydrazides, or mixtures thereof. The polyfunctional carboxylic hydrazide may be present at a concentration of 0.1% or more, 0.2% or more, 0.3% or more, or even 0.5% or more, while at the same time is generally 10% or less, and can be 7% or less, 5% or less, 2% or less, or even 1% or less, by weight based on the weight of the multistage polymeric particles.

The aqueous dispersion of the present invention may comprise water typically present at a concentration of 30% or more, and can be 40% or more, or even 50% or more, while at the same time is generally at a concentration of 90% or less, and can be 85% or less, or even 80% or less, by weight based on the weight of the aqueous dispersion.

The present invention also relates to a process for preparing the aqueous dispersion comprising the multistage polymeric particles by multistage free-radical polymerization. The process of the present invention comprises at least two stages - a stage of forming the first polymer and a stage of forming the second polymer in the presence of the first polymer,

resulting in the formation of the multistage polymeric particles comprising at least the first polymer and the second polymer. Optionally, different stages can be formed in different reactors. Each of the stages is sequentially polymerized and different from the immediately preceding and/or immediately subsequent stage by a difference in monomer compositions. The multistage free-radical polymerization process may include: (i) forming the first polymer by polymerization of a first monomer mixture, preferably in an aqueous medium, and neutralizing to pH of greater than 7.1 to obtain the neutralized first polymer, and (ii) forming the second polymer by polymerization of a second monomer mixture in the presence of the neutralized first polymer. Each stage of the free-radical polymerization can be conducted by polymerization techniques well known in the art such as suspension polymerization or emulsion polymerization of monomers such as the first and second monomer mixtures. Emulsion polymerization is a preferred process, which forms a multistage emulsion polymer. The first and second monomer mixtures may each independently comprise the monomers described above for forming the structural units of the first polymer and the second polymer, respectively. Total weight concentration of the monomers in the first monomer mixture for preparing the first polymer is equal to 100% relative to the weight of the first monomer mixture. Total weight concentration of the monomers in the second monomer mixture is equal to 100% relative to the weight of the second monomer mixture. For each monomer, the weight concentration of a monomer relative to the weight of total monomers used in preparing a polymer (e.g., the first polymer) is substantially the same as the above described weight concentration of structural units of such monomer in such polymer (e.g., the first polymer) as described above. For example, the weight concentration of each monomer in the first monomer mixture relative to the weight of the first monomer mixture is the same as the weight concentration of structural units of such monomer in the first polymer relative to the weight of the first polymer. The first and second monomer mixtures for preparing the first polymer and the second polymer, respectively, may be added neat or as an emulsion in water; or added in one or more addition or continuously, linearly or nonlinearly, over the reaction period of preparing the first polymer, the second polymer, respectively, or combinations thereof. Temperature suitable for emulsion polymerization processes may be lower than 100 °C, in a range of from 30 to 95 °C, or in a range of from 50 to 90 °C.

Neutralization of the first polymer may be conducted prior to the preparation of the second polymer. The first polymer may be neutralized to a pH value of greater than 7.1, and can be 7.2 or more, 7.3 or more, 7.4 or more, 7.5 or more, 7.6 or more, 7.7 or more, 7.8 or more, 7.9 or more, 8.0 or more, or even greater than 8.0, while at the same time is generally neutralized to a pH value of 10 or less, and can be 9.8 or less, 9.6 or less, 9.5 or less, 9.4 or less, 9.2 or less, 9.0 or less, 8.9 or less, 8.8 or less, 8.7 or less, 8.6 or less, or even 8.5 or less. Neutralization may be conducted by adding one or more base which may lead to partial or complete neutralization of the ionic or latently ionic groups of the first polymer. Examples of suitable bases include ammonia; alkali metal or alkaline earth metal compounds such as sodium hydroxide, potassium hydroxide, calcium hydroxide, zinc oxide, magnesium oxide, sodium carbonate; primary, secondary, and tertiary amines, such as triethyl amine, ethylamine, propylamine, monoisopropylamine, monobutylamine, hexylamine, ethanolamine, diethyl amine, dimethyl amine, di-n-propylamine, tributylamine, triethanolamine, dimethoxyethylamine, 2-ethoxyethylamine, 3-ethoxypropylamine, dimethylethanolamine, diisopropanolamine, morpholine, ethylenediamine, 2-diethylaminoethylamine, 2,3-diaminopropane, 1,2-propylenediamine, neopentanediamine, dimethylaminopropylamine, hexamethylenediamine, 4,9-dioxadodecane-1,12-diamine, aluminum hydroxide; or mixtures thereof.

In the multistage free-radical polymerization process for preparing the aqueous dispersion of the multistage polymeric particles, one or more free radical initiator may be used in each stage. The polymerization process may be thermally initiated or redox initiated emulsion polymerization. Examples of suitable free radical initiators include hydrogen peroxide, t-butyl hydroperoxide, cumene hydroperoxide, ammonium and/or alkali metal persulfates, sodium perborate, perphosphoric acid, and salts thereof; potassium permanganate, and ammonium or alkali metal salts of peroxydisulfuric acid. The free radical initiators may be used typically at a level of 0.01 to 3.0% by weight, based on the total weight of monomers used for preparing the multistage polymeric particles. Redox systems comprising the above described initiators coupled with a suitable reductant may be used in the polymerization process. Examples of suitable reductants include sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, acetone bisulfite, glycolic acid, hydroxymethanesulfonic acid, glyoxylic acid hydrate, lactic acid, glyceric acid, malic acid, tartaric acid and salts of the preceding acids. Metal salts of iron, copper, manganese, silver, platinum, vanadium, nickel, chromium, palladium, or cobalt may be used to catalyze the redox reaction. Chelating agents for the metals may optionally be used.

In the multistage free-radical polymerization process for preparing the aqueous dispersion of the multistage polymeric particles, one or more surfactant may be used in one or more stage of the polymerization process. The surfactant may be added prior to or during the polymerization of the monomers, or combinations thereof. A portion of the surfactant can also be added after the polymerization. Surfactants may be used for at least one stage or all stages of preparing the multistage polymeric particles. The surfactants may include anionic and/or nonionic emulsifiers. The surfactants can be reactive surfactants such as polymerizable surfactants. Examples of suitable surfactants include alkali metal or ammonium salts of alkyl, aryl, or alkylaryl sulfates, sulfonates or phosphates; alkyl sulfonic acids; sulfosuccinate salts; fatty acids; and ethoxylated alcohols or phenols. Preferably, the alkali metal or ammonium salts of alkyl, aryl, or alkylaryl sulfates

surfactant are used. The total amount of the surfactant used is usually from zero to 5%, from 0.5% to 3%, or from 0.8% to 2%, by weight based on the weight of total monomers used for preparing the multistage polymer.

In the multistage free-radical polymerization process for preparing the aqueous dispersion of the multistage polymeric particles, one or more chain transfer agent may be used in one or more stage of the polymerization process. Examples of suitable chain transfer agents include 3-mercaptopropionic acid, methyl mercaptopropionate, butyl mercaptopropionate, n-dodecyl mercaptan, benzenethiol, azelaic alkyl mercaptan, or mixtures thereof. The chain transfer agent may be used in an effective amount to control the molecular weight of polymers in the multistage polymeric particles, for example, the chain transfer agent can be used in the polymerization stage of forming the first polymer, the polymerization stage of forming the second polymer, or in both stages, and preferably, used in forming the first polymer. The concentration of the chain transfer agent in the stage of forming the first polymer and the second polymer, respectively, may be independently at a concentration of zero or more, and can be 0.1% or more, 0.2% or more, 0.25% or more, 0.3% or more, 0.5% or more, 1% or more, 1.5% or more, 2% or more, 2.5% or more, or even 2.6% or more, while at the same time is generally at a concentration of 6% or less, and can be 5% or less, 4% or less, 3.5% or less, or even 3.0% or less, by weight based on the weight of the first monomer mixture and the weight of the second monomer mixture, respectively.

The obtained aqueous dispersion of the multistage polymeric particles may be neutralized by adding one or more base to a pH value of 7.3 or more, for example, from 7.5 to 9.0, or from 7.7 to 8.5. Examples of suitable bases include those described above used in the neutralization of the first polymer. The process of preparing the aqueous dispersion of the present invention can reduce coagulum formation, for example, the coagulum content of the aqueous dispersion of the present invention can be less than 400 part per million (ppm), less than 300 ppm, less than 200 ppm, or even less than 150 ppm, after sieving with 325 mesh (44 micrometers) (further details provided below under Wet Coagulum Content Measurement). The process for preparing the aqueous dispersion of the present invention may further comprise admixing the polyfunctional carboxylic hydrazide containing at least two hydrazide groups per molecule with the multistage polymeric particles.

The aqueous dispersion of the present invention demonstrates good film formation property with a minimum film formation temperature (MFFT) of less than 35 °C, and can be 33 °C or less, 30 °C or less, 28 °C or less, 25 °C or less, and preferably, less than 20 °C, less than 18 °C, less than 15 °C, less than 12 °C, less than 10 °C, or even less than 8 °C. The MFFT is the lowest temperature at which the polymer particles of the aqueous dispersion will mutually coalesce and form a continuous film when the volatile component (for example, water) evaporates. The MFFT can be determined according to the test method described under Minimum Film Formation Temperature Measurement. The aqueous dispersion comprising multistage polymeric particles is useful in many applications including, for example, wood coatings, metal coatings, architecture coatings, and traffic paints.

The present invention also relates to an aqueous coating composition comprising the aqueous dispersion of the present invention. The aqueous coating composition may further comprise one or more pigment. Pigments may include particulate inorganic materials which are capable of materially contributing to the opacity or hiding capability of a coating. Such materials typically have a refractive index greater than 1.8. Examples of suitable pigments include titanium dioxide ($TiO_2$), zinc oxide, zinc sulfide, iron oxide, barium sulfate, barium carbonate, or mixtures thereof. The aqueous coating composition may comprise one or more extender. Extenders may include particulate inorganic materials typically having a refractive index of less than or equal to 1.8 and greater than 1.5. Examples of suitable extenders include calcium carbonate, aluminum oxide ($Al_2O_3$), clay, calcium sulfate, aluminosilicate, silicate, zeolite, mica, diatomaceous earth, solid or hollow glass, ceramic bead, and opaque polymers such as ROPAQUE™ Ultra E available from The Dow Chemical Company (ROPAQUE is a trademark of The Dow Chemical Company), or mixtures thereof. The pigments and/or extenders may be present at a concentration of zero or more, and can be 5% or more, 10% or more, or even 15% or more, while at the same time is generally at a concentration of 40% or less, 30% or less, 25% or less, or even 20% or less, by weight based on the weight of the aqueous coating composition.

The aqueous coating composition of the present invention may comprise or be free of one or more defoamer. "Defoamer" herein refers to a chemical additive that reduces and hinders the formation of foam. Defoamers may be silicone-based defoamers, mineral oil-based defoamers, ethylene oxide/propylene oxide-based defoamers, alkyl polyacrylates, or mixtures thereof. The defoamer may be present at a concentration of zero or more, and can be 0.01% or more, or even 0.1% or more, while at the same time is generally at a concentration of 2% or less, and can be 1.5% or less, or even 1% or less, by weight based on the weight of the aqueous coating composition.

The aqueous coating composition of the present invention may comprise or be free of one or more thickener (also known as "rheology modifier"). Thickeners may include polyvinyl alcohol (PVA), clay materials, acid derivatives, acid copolymers, urethane associate thickeners (UAT), polyether urea polyurethanes (PEUPU), polyether polyurethanes (PEPU), or mixtures thereof. Examples of suitable thickeners include alkali swellable emulsions (ASE) such as sodium or ammonium neutralized acrylic acid polymers; hydrophobically modified alkali swellable emulsions (HASE) such as hydrophobically modified acrylic acid copolymers; associative thickeners such as hydrophobically modified ethoxylated urethanes (HEUR); and cellulosic thickeners such as methyl cellulose ethers, hydroxymethyl cellulose (HMC), hydroxyethyl cellulose (HEC), hydrophobically-modified hydroxy ethyl cellulose (HMHEC), sodium carboxymethyl cellulose

(SCMC), sodium carboxymethyl 2-hydroxyethyl cellulose, 2-hydroxypropyl methyl cellulose, 2-hydroxyethyl methyl cellulose, 2-hydroxybutyl methyl cellulose, 2-hydroxyethyl ethyl cellulose, and 2-hydoxypropyl cellulose. Preferably, the thickener is HEUR. The thickener may be present at a concentration of zero or more, and can be 0.01% or more, 0.01% or more, or even 0.1% or more, while at the same time is generally at a concentration of 5% or less, and can be 4% or less, or even 3% or less, by weight based on the weight of the aqueous coating composition.

The aqueous coating composition of the present invention may comprise or be free of one or more wetting agent. "Wetting agent" herein refer to a chemical additive that reduces the surface tension of a coating composition, causing the aqueous coating composition to more easily spread across or penetrate the surface of a substrate. Wetting agents may be polycarboxylates, anionic, zwitterionic, or non-ionic. The wetting agent may be present at a concentration of zero or more, and can be 0.01% or more, or even 0.1% or more, while at the same time is generally at a concentration of 5% or less, and can be 4% or less, or even 3% or less, by weight based on the weight of the aqueous coating composition.

The aqueous coating composition of the present invention may comprise or be free of one or more coalescent. "Coalescent" herein means a compound that is able to aid dispersed polymer particles to form a homogeneous coating film by reducing the film formation temperature of the polymer. The coalescent typically has a molecular weight less than 410. Examples of suitable coalescents include ethylene glycol ethyl ether, ethylene glycol propyl ether, ethylene glycol butyl ether, ethylene glycol hexyl ether, diethylene glycol methyl ether, diethylene glycol ethyl ether, diethylene glycol butyl ether, diethylene glycol hexyl ether, propylene glycol n-butyl ether, dipropylene glycol n-butyl ether, dipropylene glycol methylene ether, tripropylene glycol methyl ether, propylene glycol phenyl ether, propylene glycol tert-butyl ether, 2,2,4-thimethyl-1,3-pentanediol monoisobutyrate, 2,2,4-trimethyl-1,3-pentanediol diisobutyrate, or mixtures thereof. Commercially available coalescents may include, for example, Texanol ester alcohol, OE-300, and OE-400 coalescents all from Eastman Chemical Company, COASOL coalescent from Chemoxy International, or mixtures thereof. The concentration of the coalescent in the aqueous coating composition may be less than 6%, and can be 5% or less, 4.5% or less, 4% or less, 3.5% or less, 3% or less, 2.5% or less, 2.2% or less, 2.0% or less, and preferably, less than 2%, 1.8% or less, 1.5% or less, 1.0% or less, or even zero, by weight based on the weight of the coating composition.

In addition to the components described above, the aqueous coating composition of the present invention may comprise any one or any combination of more than one type of the following additives: buffers, neutralizers, dispersants, humectants, biocides, anti-skinning agents, colorants, flowing agents, anti-oxidants, plasticizers, freeze/thaw additives, leveling agents, thixotropic agents, adhesion promoters, anti-scratch additives, and grind vehicles. These additives may be present in a total amount of zero or more, and can be 0.001% or more, or even 0.1% or more, while at the same time is generally 5% or less, and can be 3% or less, or even 2% or less, by weight based on the weight of the aqueous coating composition.

The aqueous coating composition of the present invention may be prepared with techniques known in the coating art, for example, by admixing the aqueous dispersion comprising the multistage polymeric particles with other optional components described above. Components in the aqueous coating composition may be mixed in any order to provide the aqueous coating composition of the present invention. Any of the above-mentioned optional components may also be added to the composition during or prior to the mixing to form the aqueous coating composition. The aqueous coating composition can be a one-component waterborne wood coating composition.

The present invention also provides a method of preparing a coating. The method may comprise: providing the aqueous coating composition, applying the aqueous coating composition to a substrate, and drying, or allowing to dry, the applied coating composition to form the coating. The aqueous coating composition can be applied to a substrate by incumbent means including brushing, dipping, rolling and spraying. The aqueous coating composition is preferably applied by spraying. The standard spray techniques and equipment for spraying such as air-atomized spray, air spray, airless spray, high volume low pressure spray, and electrostatic spray such as electrostatic bell application, and either manual or automatic methods can be used. After the aqueous coating composition of the present invention has been applied to a substrate, the coating composition can dry, or allow to dry, to form a film (this is, coating) at room temperature (20-25 °C), or at an elevated temperature, for example, from 35 to 60°C. The aqueous coating composition can provide the coating obtained therefrom (that is, the film obtained after drying, or allowing to dry, the aqueous coating composition applied to a substrate) and the coated substrate with excellent alcohol resistance with rating of 4 or more as determined according to GB/T 4893.1-2005. The coating and the coated substrate can also demonstrate water resistance with rating of 4 or more, a pencil hardness of 2B or harder as determined according to GB/T 23999-2009 standard, and an early block resistance level of C-0 or better as determined according to GB/T 23982-2009 standard (further details provided in the Examples section below).

The aqueous coating composition of the present invention can be applied to, and adhered to, various substrates. Examples of suitable substrates include concrete, cementious substrates, wood, metals, stones, elastomeric substrates, glass or fabrics, and preferably, wood. The aqueous coating composition is suitable for various coating applications, such as architecture coatings, marine and protective coatings, automotive coatings, wood coatings including furniture coatings, joinery coatings, floor coatings, coil coatings, traffic paints, and civil engineering coatings. The aqueous coating composition can be used alone, or in combination with other coatings to form multi-layer coatings.

EXAMPLES

Some embodiments of the invention will now be described in the following Examples, wherein all parts and percentages are weight percentages unless otherwise specified. The materials used in the examples and their abbreviations are given as below. ACRYSOL and DOWANOL are trademarks of The Dow Chemical Company.

2-Ethylhexyl acrylate (EHA), methacrylic acid (MAA), methyl methacrylate (MMA), butyl acrylate (BA), allyl methacrylate (ALMA), 3-mercaptopropionic acid (3-MPA), butyl 3-mercaptopropanoate (BMP) and methyl 3-mercaptopropanoate (MMP) are all available from Sinoreagent Group.

Phosphoethyl methacrylate (PEM) is available from Solvay.

Gamma-methacryloxypropyltrimethoxysilane (A-174) is available from Momentive.

Diacetone acrylamide (DAAM) and adipic dihydrazide (ADH) are both available from Kyowa Hakko Chemical Co., Ltd.

DISPONIL™ Fes-32 surfactant (Fes-32) and DISPONIL Fes-993 surfactant (Fes-993), available from BASF, are sodium salts of fatty alcohol ether sulphates.

POLYSTEP™ P-12A surfactant (P-12A), available from Stepan, is a phosphate ester.

AEROSOL™ A-102 Surfactant (A-102), available from Solvay, is disodium ethoxylated alcohol ($C_{10}$-$C_{12}$) half ester of sulfosuccinic acid.

BRUGGOLITE™ FF6 reducing agent (FF6), available from Brueggemann, is a sodium salt of an organic sulfinic acid derivative.

AMINOION™ RE1000 surfactant (RE1000) (30%-31% active), available from Nippon Nyukazai Co., Ltd., comprises poly(oxy-1,2-ethanediyl), alpha-sulfo-omega-(methylphenoxy)-ar-styrenated, 2-Propenoic acid, 2-methyl-2-(dimethylamino)ethyl ester salts.

DOWANOL™ DPnB (dipropylene glycol n-butyl ether) and DOWANOL DPM dipropylene glycol methyl ether), available from The Dow Chemical Company, are used as coalescents.

ACEMATT TS-100, available from Evonik, is silicon dioxide and used as a matting agent.

TEGO Airex 902 W polyether siloxane, available from Evonik, is used as a deformer.

BYK-346 polyether modified siloxane, available from BYK, is used as a wetting agent.

ACRYSOL™ RM-8W nonionic urethane rheology modifier and ACRYSOL RM-5000 nonionic associative rheology modifier are both available from The Dow Chemical Company.

The following standard analytical equipment and methods are used in the Examples and in determining the properties and characteristics stated herein:

Example (Ex) 1 Aqueous Multistage Polymer Dispersion (MP-1)

Preparation of Monomer Emulsion 1 (ME1): Fes-32 surfactant (27.42 grams (g), 31.00% active) was dissolved in deionized (DI) water (74.1 g) with stirring. Then MMA (493.05 g), a solution of DAAM (20.15 g DAAM dissolved in 70.80 g DI water), MAA (58.46 g), ALMA (5.79 g), A-174 (11.58 g) and BMP (15.39 g) were added into the resultant surfactant solution to obtain ME1.

Preparation of Monomer Emulsion 2 (ME2): P-12A surfactant (12.80 g, 25.00% active) was dissolved in DI water (150.77 g) with stirring. Then EHA (329.71 g), BA (234.25 g), MMA (276.79 g), and a solution of DAAM (25.90 g DAAM dissolved in 104.00 g DI water) were added into the resultant surfactant solution to obtain ME2.

A solution containing Fes-32 surfactant (17.21 g, 31.00% active) and DI water (1152.07 g) was added into a 4-neck, 5-liter round bottom flask equipped with a thermocouple, a cooling condenser and an agitator, and was heated to 90 °C under nitrogen ($N_2$) atmosphere. An aqueous APS initiator solution (2.79 g APS in 64.88 g DI water), and 3.91% by weight of ME1 obtained above were then added into the flask. Within about 5 minutes (min), initiation of polymerization was confirmed by a temperature increase by 3-6 °C and a change of the external appearance of the reaction mixture. After heat generation stopped, the aqueous $Na_2CO_3$ solution (1.188 g $Na_2CO_3$ in 41.00 g DI water) was charged into the flask. And then the remaining ME1 was added gradually to the flask over a period of 40 min with stirring. Then the ME1 tank was rinsed by DI water (45.64 g). At the same time, an aqueous APS initiator solution (1.48 g APS in 176.00 g DI water) was added gradually to the flask over a period of 50 min. The contents of the flask were maintained at 84-86 °C. After the APS initiator was consumed and washed by 7.60 g DI water, ammonia (25% active, 45.02 g) was gradually added into the flask over 15 min to adjust a pH value to 8.84, followed by a rinse of DI water (3.4 g). The contents of the flask were cooled to 40 °C.

ME2 obtained above was then added into the flask over 50 min and then the ME2 tank was rinsed by DI water (45.64 g). Then a water solution of t-BHP (37.64 g, 4.54% active) and FF6 (36.63 g, 3.90% active) was then fed into the flask over 4 min and then each tank was rinsed by DI water (13.56 g). Then the reaction temperature raised from 32.6 °C up to 75.5 °C resulted from the polymerization. 488.4 g DI water was added into reactor to decrease the viscosity. Upon the polymerization completing, the reaction mixture was held at 75 °C for 10 min. A water solution of t-BHP (21.39 g, 4.58% active) and FF6 (20.81 g, 3.94% active) was then fed into the flask over 30 min and then each tank was rinsed by DI water

(7.70 g) followed by cooling to 40 °C. Then ADH slurry (28.95 g in 55.51 g DI water) was added at 40 °C over 10 min, followed by a rinse of DI water (7.73 g), and then held for 20 min. The resulting dispersion was cooled to room temperature and filtered to obtain the aqueous polymer dispersion.

Ex 2 Aqueous Multistage Polymer Dispersion (MP-2)

The aqueous multistage polymer dispersion was prepared, respectively, according to the same procedure as described above for preparing the aqueous multistage polymer dispersion of MP-1 above, based on monomer formulations and the dosage of ADH given in Table 1.

Ex 3 Aqueous Multistage Polymer Dispersion (MP-3)

Preparation of Monomer Emulsion 1 (ME1): Fes-32 surfactant (13.71 g, 31.00% active) was dissolved in DI water (37.05 g) with stirring. Then MMA (252.14 g), a solution of DAAM (10.08 g DAAM dissolved in 35.40 g DI water), MAA (17.53 g), ALMA (2.89 g), A-174 (5.79 g) and BMP (7.69 g) were added into the resultant surfactant solution to obtain ME1.

Preparation of Monomer Emulsion 2 (ME2): P-12A surfactant (6.40 g, 25.00% active) was dissolved in DI water (75.38 g) with stirring. Then EHA (164.86 g), BA (117.13 g), MMA (138.40 g), and a solution of DAAM (12.95 g DAAM dissolved in 52.00 g DI water) were added into the resultant surfactant solution to obtain ME2.

A solution containing Fes-32 surfactant (8.61 g, 31.00% active) and DI water (801.04 g) was added into a 4-neck, 5-liter round bottom flask equipped with a thermocouple, a cooling condenser and an agitator, and was heated to 90 °C under $N_2$ atmosphere. An aqueous APS initiator solution (1.40 g APS in 32.44 g DI water) and 3.91% by weight of ME1 obtained above were then added into the flask. Within about 5 min, initiation of polymerization was confirmed by a temperature increase by 3-6°C and a change of the external appearance of the reaction mixture. After heat generation stopped, the aqueous $Na_2CO_3$ solution (0.59 g $Na_2CO_3$ in 20.50 of DI water) was charged into the flask. And then the remaining ME1 was added gradually to the flask over a period of 40 min with stirring. Then the ME1 tank was rinsed by DI water (22.82 g). At the same time, an aqueous APS initiator solution (0.74 g APS in 44.00 g DI water) was added gradually to the flask over a period of 50 min. The contents of the flask were maintained at 84-86 °C. After the APS initiator was consumed, followed by a rinse of DI water (3.80 g), ammonia (25% active, 13.51 g) was gradually added into the flask over 15 min to adjust a pH value to 8.06 and washed by DI water (1.7 g). The contents of the flask were cooled to 40 °C.

ME2 obtained above was then added into the flask over 50 min, followed by a rinse of DI water (22.82 g). Then a water solution of t-BHP (18.82 g, 4.54% active) and FF6 (18.3 g, 3.90% active) was fed into the flask over 4 min and then each tank was rinsed by DI water (6.78 g). Then the reaction temperature raised from 32.6 °C up to 75.5 °C resulted from the polymerization. Upon the polymerization completing, the reaction mixture was held at 75 °C for 10 min. A water solution of t-BHP (10.69 g, 4.58% active) and FF6 (10.41 g, 3.94% active) was fed into the flask over 30 min and then each tank was rinsed by DI water (3.85 g), followed by cooling to 40 °C. Then ADH slurry (14.47 g in 27.76 g DI water) was added at 40 °C over 10 min, followed by a rinse of DI water (3.87 g), and then held for 20 min. The resulting dispersion was cooled to room temperature and filtered to obtain the aqueous polymer dispersion.

Ex 4 Aqueous Multistage Polymer Dispersion (MP-4)

Preparation of Monomer Emulsion 1 (ME1): Fes-32 surfactant (17.14 g, 31.00% active) was dissolved in DI water (46.32 g) with stirring. Then MMA (308.16 g), a solution of DAAM (12.59 g DAAM dissolved in 44.25 g DI water), MAA (36.54 g), ALMA (3.62 g), A-174 (7.24 g) and BMP (9.61 g) were added into the resultant surfactant solution to obtain ME1.

Preparation of Monomer Emulsion 2 (ME2): P-12A surfactant (5.33 g, 25.00% active) was dissolved in DI water (62.82 g) with stirring. Then EHA (137.38 g), BA (97.60 g), MMA (115.33 g), and a solution of DAAM (10.79 g DAAM dissolved in 43.33 g DI water) were added into the resultant surfactant solution to obtain ME2.

A solution containing Fes-32 surfactant (8.61 g, 31.00% active) and DI water (801.04 g) was added into a 4-neck, 5-liter round bottom flask equipped with a thermocouple, a cooling condenser and an agitator, and was heated to 90 °C under $N_2$ atmosphere. An aqueous APS initiator solution (1.40 g APS in 32.44 g DI water), and 3.13% by weight of ME1 obtained above were then added into the flask. Within about 5 min, initiation of polymerization was confirmed by a temperature increase by 3-6 °C and a change of the external appearance of the reaction mixture. After heat generation stopped, the aqueous $Na_2CO_3$ solution (0.59 g $Na_2CO_3$ in 20.50 g DI water) was charged into the flask. And then the remaining ME1 was added gradually to the flask over a period of 50 min with stirring. Then the ME1 tank was rinsed by DI water (22.82 g). At the same time, an aqueous APS initiator solution (1.05 g APS in 48.00 g DI water) was added gradually to the flask over a period of 60 min, followed by a rinse of DI water (1.90 g). The contents of the flask were maintained at 84-86 °C. Then ammonia (25% active, 28.14 g) was gradually added into the flask over 15 min to a pH value >8.0, followed by a rinse of DI water (1.7 g), and then held for 20 min.

ME2 obtained above was then added into the flask in the same manner as ME1 over 50 min and the ME2 tank was

rinsed by DI water (22.82 g). Then an aqueous APS initiator solution (0.88 g APS in 40.00 g DI water) was added gradually to the flask over a period of 50 min, followed by a rinse of DI water (1.9 g). Upon completing addition, the reaction mixture was held at 80 °C for 10 min. DI water (64 g) was charged into the flask. A water solution of t-BHP (10.69 g, 4.58% active) and FF6 (10.41 g, 3.94% active) was then fed into the flask over 30 min followed by cooling to 40 °C and then each tank was rinsed by DI water (3.85 g). Then ADH slurry (11.69 g in 27.76 g DI water) was added at 40 °C over 10 min, followed by a rinse of DI water (3.87 g), and then held for 20 min. The resulting dispersion was cooled to room temperature and filtered to obtain the aqueous polymer dispersion with 35-37% solids.

Ex 5 Aqueous Multistage Polymer Dispersion (MP-5)

Preparation of Monomer Emulsion 1 (ME1): Fes-32 surfactant (11.38 g, 31.00% active) and Fes-993 surfactant (4.15 g, 31% active) were dissolved in DI water (110.36 g) with stirring. Then MMA (405.55 g), a solution of DAAM (16.66 g DAAM dissolved in 40.94 g DI water), MAA (32.84 g), ALMA (4.78 g), A-174 (9.57 g), PEM (7.61 g) and 3-MPA (1.43 g) were added into the resultant surfactant solution to obtain ME1.

Preparation of Monomer Emulsion 2 (ME2): Fes-32 surfactant (21.33 g, 31.00% active) was dissolved in DI water (92.56 g) with stirring. Then EHA (424.60 g), BA (212.13 g), MMA (445.29 g), and a solution of DAAM (33.36 g DAAM dissolved in 268.78 g DI water) were added into the resultant surfactant solution to obtain ME2.

A solution containing Fes-32 surfactant (18.96 g, 31.00% active) and DI water (968.32 g) was added into a 4-neck, 5-liter round bottom flask equipped with a thermocouple, a cooling condenser and an agitator, and was heated to 89 °C under $N_2$ atmosphere. An aqueous APS initiator solution (3.08 g APS in 50 g DI water), and 5.37% by weight of ME1 obtained above were then added into the flask. Within about 5 min, initiation of polymerization was confirmed by a temperature increase by 3-6°C and a change of the external appearance of the reaction mixture. After heat generation stopped, the remaining ME1 was added gradually to the flask over a period of 50 min with stirring. Then the ME1 tank was rinsed by DI water (85.44 g). At the same time, an aqueous APS initiator solution (1.55 g APS in 135.28 g DI water) was added gradually to the flask over a period of 50 min. The contents of the flask were maintained at 89-91 °C. After the APS initiator was consumed, followed by a rinse of DI water (7.12 g), ammonia (25% active, 18.51 g) was gradually added into the flask over 15 min to a pH >8.0, followed by a rinse of DI water (25.63 g), and then held for 20 min.

ME2 obtained above was then added into the flask in the same manner as ME1 over 110 min and then the ME2 tank was rinsed by DI water (35.60 g). At the same time, an aqueous APS initiator solution (2.72 g APS in 85.44 g DI water, 8.64 g Aerosol A-102 (30% active) in 28.48 g DI water) was added gradually to the flask over a period of 120 min, followed by a rinse of DI water (7.12 g). Upon completing addition, the reaction mixture was held at 80 °C for 10 min. DI water (725.60 g) was charged into the flask. A water solution of t-BHP (44.25 g, 2.42% active) and FF6 (43.60 g, 2.00% active) was then fed into the flask over 45 min and then each rinsed by DI water (3.56 g) followed by cooling to 40 °C. Then ADH slurry (25.24 g in 106.80 g DI water) was added at 40 °C over 10 min, followed by a rinse of DI water (28.48 g), and then held for 20 min. The resulting dispersion was cooled to room temperature and diluted by DI water (34.91 g) and then filtered to obtain the aqueous polymer dispersion.

Ex 6 Aqueous Multistage Polymer Dispersion (MP-6)

Preparation of Monomer Emulsion 1 (ME1): Fes-32 surfactant (13.71 g, 31.00% active) was dissolved in DI water (37.05 g) with stirring. Then MMA (226.24 g), a solution of DAAM (10.08 g DAAM dissolved in 35.40 g DI water), MAA (43.80 g), ALMA (2.89 g), A-174 (5.79 g) and BMP (7.70 g) were added into the resultant surfactant solution to obtain ME1.

Preparation of Monomer Emulsion 2 (ME2): P-12A surfactant (6.40 g, 25.00% active) was dissolved in DI water (75.38 g) with stirring. Then EHA (164.86 g), BA (117.13 g), MMA (138.39 g), and a solution of DAAM (12.95 g DAAM dissolved in 52.00 g DI water) were added into the resultant surfactant solution to obtain ME2.

A solution containing Fes-32 surfactant (8.61 g, 31.00% active) and DI water (801.04 g) was added into a 4-neck, 5-liter round bottom flask equipped with a thermocouple, a cooling condenser and an agitator, and was heated to 90 °C under $N_2$ atmosphere. An aqueous APS initiator solution (1.40 g APS in 32.44 g DI water), and 3.13% by weight of ME1 obtained above were then added into the flask. Within about 5 min, initiation of polymerization was confirmed by a temperature increase by 3-6°C and a change of the external appearance of the reaction mixture. After heat generation stopped, the aqueous $Na_2CO_3$ solution (0.59 g $Na_2CO_3$ in 20.50 g DI water) was charged into the flask. And then the remaining ME1 was added gradually to the flask over a period of 40 min with stirring. Then the ME1 tank was rinsed by DI water (22.82 g). At the same time, an aqueous APS initiator solution (0.877 g APS in 40 g DI water) was added gradually to the flask over a period of 50 min, followed by a rinse of DI water (1.90 g). The contents of the flask were maintained at 84-86 °C. Ammonia (25% active, 33.77 g) was gradually added into the flask over 15 min to a pH >8.0, followed by a rinse of DI water (1.7 g), and then held for 20 min.

ME2 obtained above was then added into the flask in the same manner as ME1 over 60 min and the ME2 tank was rinsed by DI water (22.82 g). Then an aqueous APS initiator solution (1.053 g APS in 44.00 g DI water) was added gradually

to the flask over a period of 60 min, followed by a rinse of DI water (1.9 g). Upon completing addition, the reaction mixture was held at 80 °C for 10 min. DI water (19.02 g) was charged into the flask. A water solution of t-BHP (10.69 g, 4.58% active) and FF6 (10.41 g, 3.94% active) was then fed into the flask over 30 min followed by cooling to 40 °C and then each tank was rinsed by DI water (3.85 g). Then ADH slurry (14.47 g in 27.76 g DI water) was added at 40 °C over 10 min, followed by a rinse of DI water (3.87 g), and then held for 20 min. The resulting dispersion was cooled to room temperature and filtered to obtain the aqueous polymer dispersion.

Ex 7 Aqueous Multistage Polymer Dispersion (MP-7)

Preparation of Monomer Emulsion 1 (ME1): Fes-32 surfactant (13.71 g, 31.00% active) was dissolved in DI water (37.05 g) with stirring. Then MMA (246.53 g), a solution of DAAM (10.08 g DAAM dissolved in 35.40 g DI water), MAA (29.23 g), ALMA (2.89 g), A-174 (5.79 g) and BMP (7.70 g) were added into the resultant surfactant solution to obtain ME1.

Preparation of Monomer Emulsion 2 (ME2): P-12A surfactant (6.40 g, 25.00% active) was dissolved in DI water (75.38 g) with stirring. Then EHA (164.86 g), BA (117.13 g), MMA (151.34 g), and 52.00 g DI water were added into the resultant surfactant solution to obtain ME2.

A solution containing Fes-32 surfactant (8.61 g, 31.00% active) and DI water (801.04 g) was added into a 4-neck, 5-liter round bottom flask equipped with a thermocouple, a cooling condenser and an agitator, and was heated to 90 °C under $N_2$ atmosphere. An aqueous APS initiator solution (1.40 g APS in 32.44 g DI water), and 3.13% by weight of ME1 obtained above were then added into the flask. Within about 5 min, initiation of polymerization was confirmed by a temperature increase by 3-6°C and a change of the external appearance of the reaction mixture. After heat generation stopped, the aqueous $Na_2CO_3$ solution (0.59 g $Na_2CO_3$ in 20.50 g DI water) was charged into the flask. And then the remaining ME1 was added gradually to the flask over a period of 40 min with stirring. Then the ME1 tank was rinsed by DI water (22.82 g). At the same time, an aqueous APS initiator solution (0.877 g APS in 40 g DI water) was added gradually to the flask over a period of 50 min, followed by a rinse of DI water (1.90 g). The contents of the flask were maintained at 84-86 °C. Ammonia (25% active, 22.51 g) was gradually added into the flask over 15 min to a pH >8.0, followed by a rinse of DI water (1.7 g), and then held for 20 min.

ME2 obtained above was then added into the flask in the same manner as ME1 over 60 min and the ME2 tank was rinsed by DI water (22.82 g). Then an aqueous APS initiator solution (1.053 g of APS in 44.00 g of DI water) was added gradually to the flask over a period of 60 min, followed by a rinse of DI water (1.9 g). Upon completing addition, the reaction mixture was held at 80 °C for 10 min. DI water (19.02 g) was charged into the flask. A water solution of t-BHP (10.69 g, 4.58% active) and FF6 (10.41 g, 3.94% active) was then fed into the flask over 30 min followed by cooling to 40 °C and then each tank was rinsed by DI water (3.85 g). Then ADH slurry (5.04 g in 27.76 g DI water) was added at 40 °C over 10 min, followed by a rinse of DI water (3.87 g), and then held for 20 min. The resulting dispersion was cooled to room temperature and filtered to obtain the aqueous polymer dispersion.

Exs 8-10 Aqueous Multistage Polymer Dispersion (MP-8, MP-9 and MP-10)

The aqueous multistage polymer dispersions of MP-8, MP-9, and MP-10 were prepared, respectively, according to the same procedure as described above for preparing the aqueous multistage polymer dispersion of MP-7 above, based on monomer formulations and the dosage of ADH given in Table 1.

Comparative (Comp) Ex 1 Aqueous Multistage Polymer Dispersion (CMP-1)

Preparation of Monomer Emulsion 1 (ME1): RE1000 surfactant (32.52 g, 31.00% active) was dissolved in DI water (74.1 g) with stirring. Then MMA (487.27 g), a solution of DAAM (20.15 g DAAM dissolved in 70.80 g DI water), MAA (58.46 g), A-174 (11.57 g) and BMP (15.39 g) were added into the resultant surfactant solution to obtain ME1.

Preparation of Monomer Emulsion 2 (ME2): RE1000 surfactant (13.94 g, 31.00% active) was dissolved in DI water (150.77 g) with stirring. Then EHA (329.71 g), BA (234.25 g), MMA (276.79 g), and a solution of DAAM (25.90 g DAAM dissolved in 104.00 g DI water) were added into the resultant surfactant solution to obtain ME2.

A solution containing RE1000 surfactant (13.94 g, 31.00% active) and DI water (1152.07 g) was added into a 4-neck, 5-liter round bottom flask equipped with a thermocouple, a cooling condenser and an agitator, and was heated to 90 °C under $N_2$ atmosphere. An aqueous APS initiator solution (2.79 g APS in 64.88 g DI water), and 3.91% by weight of ME1 obtained above were then added into the flask. Within about 5 min, initiation of polymerization was confirmed by a temperature increase by 3-6°C and a change of the external appearance of the reaction mixture. After heat generation stopped, the aqueous $Na_2CO_3$ solution (1.188 g $Na_2CO_3$ in 41.00 g DI water) was charged into the flask. And then the remaining ME1 was added gradually to the flask over a period of 40 min with stirring. Then the ME1 tank was rinsed by 45.64 g DI water. At the same time, an aqueous APS initiator solution (1.48 g APS in 176.00 g DI water) was added gradually to the flask over a period of 50 min. The contents of the flask were maintained at 84-86 °C. After the APS initiator

was consumed and washed by 7.60 g DI water, ammonia (25% active, 45.02 g) was gradually added into the flask over 15 min to a pH >8.0, followed by a rinse of DI water (3.4 g). The contents of the flask were cooled to 40 °C.

ME2 obtained above was then added into the flask over 50 min and then the ME2 tank was rinsed by DI water (45.64 g). Then a water solution of t-BHP (37.64 g, 4.54% active) and FF6 (36.63 g, 3.90% active) was then fed into the flask over 4 min and then each tank was rinsed by 13.56 g DI water. Then the reaction temperature raised from 32.6 °C up to 75.5 °C resulted from the polymerization. 38.04 g DI water was added into reactor to decrease the viscosity. Upon the polymerization completing, the reaction mixture was held at 75 °C for 10 min. A water solution of t-BHP (21.39 g, 4.58% active) and FF6 (20.81 g, 3.94% active) was then fed into the flask over 30 min and then each tank was rinsed by DI water (7.70 g), followed by cooling to 40 °C. Then ADH slurry (28.95 g in 55.51 g DI water) was added at 40 °C over 10 min, followed by a rinse of DI water (7.73 g), and then held for 20 min. The resulting dispersion was cooled to room temperature and filtered to obtain the aqueous polymer dispersion.

<u>Comp Ex 2 Aqueous Multistage Polymer Dispersion (CMP-2)</u>

The aqueous multistage polymer dispersion of CMP 2 was prepared, respectively, according to the same procedure as described above for preparing the aqueous multistage polymer dispersion of MP-1 above, based on monomer formulations and the dosage of ADH given in Table 1.

<u>Comp Ex 3 Aqueous Multistage Polymer Dispersion (CMP-3)</u>

Preparation of Monomer Emulsion 1 (ME1): P-12A surfactant (6.40 g, 25.00% active) was dissolved in DI water (75.38 g) with stirring. Then EHA (164.86 g), BA (117.13 g), MMA (138.39 g), and a solution of DAAM (12.95 g DAAM in 52.00 g DI water) were added into the resultant surfactant solution to obtain ME1.

Preparation of Monomer Emulsion 2 (ME2): Fes-32 surfactant (13.71 g, 31.00% active) was dissolved in DI water (37.05 g) with stirring. Then MMA (246.53 g), a solution of DAAM (10.08 g DAAM dissolved in 35.40 g DI water), MAA (29.23 g), ALMA (2.89 g), A-174 (5.79 g) and BMP (7.70 g) were added into the resultant surfactant solution to obtain ME2.

A solution containing Fes-32 surfactant (8.61 g, 31.00% active) and DI water (801.04 g) was added into a 4-neck, 5-liter round bottom flask equipped with a thermocouple, a cooling condenser and an agitator, and was heated to 90 °C under $N_2$ atmosphere. An aqueous APS initiator solution (1.40 g APS in 32.44 g DI water), and 3.13% by weight of ME1 obtained above were then added into the flask. Within about 5 min, initiation of polymerization was confirmed by a temperature increase by 3-6°C and a change of the external appearance of the reaction mixture. After heat generation stopped, the aqueous $Na_2CO_3$ solution (0.59 g $Na_2CO_3$ in 20.50 g DI water) was charged into the flask. And then the remaining ME1 was added gradually to the flask over a period of 60 min with stirring. Then the ME1 tank was rinsed by DI water (22.82 g). At the same time, an aqueous APS initiator solution (1.053 g APS in 44.00 g DI water) was added gradually to the flask over a period of 60 min, followed by a rinse of DI water (1.90 g). The contents of the flask were maintained at 84-86 °C. Then ammonia (25% active, 22.51 g) was gradually added into the flask over 15 min to a pH >8.0, followed by a rinse of DI water (1.7 g), and then held for 20 min.

ME2 obtained above was then added into the flask in the same manner as ME1 over 40 min and the ME2 tank was rinsed by DI water (22.82 g). Then an aqueous APS initiator solution (0.877 g of APS in 40 g of DI water) was added gradually to the flask over a period of 50 min, followed by a rinse of DI water (1.9 g). Upon completing addition, the reaction mixture was held at 80 °C for 10 min. DI water (19.02 g) was charged into the flask. A water solution of t-BHP (10.69 g, 4.58% active) and FF6 (10.41 g, 3.94% active) was then fed into the flask over 30 min followed by cooling to 40 °C and then each tank was rinsed by DI water (3.85 g). Then ADH slurry (14.47 g in 27.76 g DI water) was added at 40 °C over 10 min, followed by a rinse of DI water (3.87 g), and then held for 20 min. The resulting dispersion was cooled to room temperature and filtered to obtain the aqueous polymer dispersion.

<u>Comp Ex 4 Aqueous Multistage Polymer Dispersion (CMP-4)</u>

The aqueous multistage polymer dispersion of CMP 4 was prepared, respectively, according to the same procedure as described above for preparing the aqueous multistage polymer dispersion of MP-7 above, based on monomer formulations and the dosage of ADH given in Table 1.

<u>Comp Ex 5 Aqueous Multistage Polymer Dispersion (CMP-5)</u>

Preparation of Monomer Emulsion 1 (ME1): Fes-32 surfactant (13.71 g, 31.00% active) was dissolved in DI water (37.05 g) with stirring. Then MMA (246.53 g), a solution of DAAM (10.08 g DAAM dissolved in 35.40 g DI water), MAA (29.23 g), ALMA (2.89 g), A-174 (5.79 g) and BMP (7.70 g) were added into the resultant surfactant solution to obtain ME1.

Preparation of Monomer Emulsion 2 (ME2): P-12A surfactant (6.40 g, 25.00% active) was dissolved in DI water

(75.38 g) with stirring. Then EHA (164.86 g), BA (117.13 g), MMA (138.39 g), and a solution of DAAM (12.95 g DAAM in 52.00 g DI water) were added into the resultant surfactant solution to obtain ME2.

A solution containing Fes-32 surfactant (8.61 g, 31.00% active) and DI water (801.04 g) was added into a 4-neck, 5-liter round bottom flask equipped with a thermocouple, a cooling condenser and an agitator, and was heated to 90 °C under $N_2$ atmosphere. An aqueous APS initiator solution (1.40 g APS in 32.44 g DI water), and 3.13% by weight of ME1 obtained above were then added into the flask. Within about 5 min, initiation of polymerization was confirmed by a temperature increase by 3-6°C and a change of the external appearance of the reaction mixture. After heat generation stopped, the aqueous $Na_2CO_3$ solution (0.59 g $Na_2CO_3$ in 20.50 g DI water) was charged into the flask. And then the remaining ME1 was added gradually to the flask over a period of 40 min with stirring. Then the ME1 tank was rinsed by DI water (22.82 g). At the same time, an aqueous APS initiator solution (0.877 g APS in 40 g DI water) was added gradually to the flask over a period of 50 min, followed by a rinse of DI water (1.90 g). The contents of the flask were maintained at 84-86 °C. Then ammonia (25% active, 7.50 g) was gradually added into the flask over 15 min to pH of 7.08, followed by a rinse of DI water (1.7 g), and then held for 20 min.

ME2 obtained above was then added into the flask in the same manner as ME1 over 60 min and the ME2 tank was rinsed by DI water (22.82 g). Then an aqueous APS initiator solution (1.053 g APS in 44.00 g DI water) was added gradually to the flask over a period of 60 min, followed by a rinse of DI water (1.9 g). Upon completing addition, the reaction mixture was held at 80 °C for 10 min. DI water (19.02 g) was charged into the flask. A water solution of t-BHP (10.69 g, 4.58% active) and FF6 (10.41 g, 3.94% active) was then fed into the flask over 30 min followed by cooling to 40 °C and then each tank was rinsed by DI water (3.85 g). Ammonia (25% active, 9.53 g) was added into the flask over 5 min and then held for 10 min. Then ADH slurry (14.47 g in 27.76 g DI water) was added at 40 °C over 10 min, followed by a rinse of DI water (3.87 g), and then held for 20 min. The resulting dispersion was cooled to room temperature and filtered to obtain the aqueous polymer dispersion.

<u>Comp Ex 6 Aqueous Multistage Polymer Dispersion (CMP-6)</u>

Preparation of Monomer Emulsion 1 (ME1): Fes-32 surfactant (13.71 g, 31.00% active) was dissolved in DI water (37.05 g) with stirring. Then MMA (211.75 g), a solution of DAAM (10.08 g DAAM dissolved in 35.40 g DI water), MAA (58.46 g), ALMA (2.89 g), A-174 (5.79 g) and BMP (7.69 g) were added into the resultant surfactant solution to obtain ME1.

Preparation of Monomer Emulsion 2 (ME2): P-12A surfactant (6.40 g, 25.00% active) was dissolved in DI water (75.38 g) with stirring. Then EHA (164.86 g), BA (117.13 g), MMA (138.40 g), and a solution of DAAM (12.95 g DAAM in 52.00 g DI water) were added into the resultant surfactant solution to obtain ME2.

A solution containing Fes-32 surfactant (8.61 g, 31.00% active) and DI water (801.04 g) was added into a 4-neck, 5-liter round bottom flask equipped with a thermocouple, a cooling condenser and an agitator, and was heated to 90 °C under $N_2$ atmosphere. An aqueous APS initiator solution (1.40 g APS in 32.44 g DI water), and 3.13% by weight of ME1 obtained above were then added into the flask. Within about 5 min, initiation of polymerization was confirmed by a temperature increase by 3-6°C and a change of the external appearance of the reaction mixture. After heat generation stopped, the aqueous $Na_2CO_3$ solution (0.59 g $Na_2CO_3$ in 20.50 g DI water) was charged into the flask. And then the remaining ME1 was added gradually to the flask over a period of 40 min with stirring. Then the ME1 tank was rinsed by DI water (22.82 g). At the same time, an aqueous APS initiator solution (0.877 g APS in 40 g DI water) was added gradually to the flask over a period of 50 min, followed by a rinse of DI water (1.90 g). The contents of the flask were maintained at 84-86 °C. Then ammonia (25% active, 45.02 g) was gradually added into the flask over 15 min to a pH of 8.04, followed by a rinse of DI water (1.7 g), and then held for 20 min. The contents of the flask were cooled to 40 °C.

ME2 obtained above was then added into the flask over 50 min and then the ME2 tank was rinsed by DI water (22.82 g). Then a water solution of t-BHP (18.82 g, 4.54% active) and FF6 (18.3 g, 3.90% active) was then fed into the flask over 4 min and then each tank was rinsed by DI water (6.78 g). Then the reaction temperature raised from 32.6 °C up to 75.5 °C resulted from the polymerization. Upon the polymerization completing, the reaction mixture was held at 75 °C for 10 min. A water solution of t-BHP (10.69 g, 4.58% active) and FF6 (10.41 g, 3.94% active) was then fed into the flask over 30 min and then each tank was rinsed by DI water (3.85 g) followed by cooling to 40 °C. Then ADH slurry (14.47 g in 27.76 g DI water) was added at 40 °C over 10 min, followed by a rinse of DI water (3.87 g), and then held for 20 min. The resulting dispersion was cooled to room temperature and filtered to obtain the aqueous polymer dispersion.

<u>Comp Ex 7 Aqueous Multistage Polymer Dispersion (CMP-7)</u>

Preparation of Monomer Emulsion 1 (ME1): Fes-32 surfactant (13.71 g, 31.00% active) was dissolved in DI water (37.05 g) with stirring. Then MMA (255.00 g), a solution of DAAM (10.08 g DAAM dissolved in 35.40 g DI water), MAA (14.60 g), ALMA (2.89 g), A-174 (5.79 g) and BMP (7.70 g) were added into the resultant surfactant solution to obtain ME1.

Preparation of Monomer Emulsion 2 (ME2): P-12A surfactant (6.40 g, 25.00% active) was dissolved in DI water (75.38 g) with stirring. Then EHA (164.86 g), BA (117.13 g), MMA (138.39 g), and a solution of DAAM (12.95 g DAAM in

52.00 g DI water) were added into the resultant surfactant solution to obtain ME2.

A solution containing Fes-32 surfactant (8.61 g, 31.00% active) and DI water (801.04 g) was added into a 4-neck, 5-liter round bottom flask equipped with a thermocouple, a cooling condenser and an agitator, and was heated to 90 °C under $N_2$ atmosphere. An aqueous APS initiator solution (1.40 g APS in 32.44 g DI water), and 3.13% by weight of ME1 obtained above were then added into the flask. Within about 5 min, initiation of polymerization was confirmed by a temperature increase by 3-6°C and a change of the external appearance of the reaction mixture. After heat generation stopped, the aqueous $Na_2CO_3$ solution (0.59 g $Na_2CO_3$ in 20.50 g DI water) was charged into the flask. And then the remaining ME1 was added gradually to the flask over a period of 40 min with stirring. Then the ME1 tank was rinsed by DI water (22.82 g). At the same time, an aqueous APS initiator solution (0.877 g APS in 40 g DI water) was added gradually to the flask over a period of 50 min, followed by a rinse of DI water (1.90 g). The contents of the flask were maintained at 84-86 °C. Then ammonia (25% active, 11.26 g) was gradually added into the flask over 15 min to a pH >8.0, followed by a rinse of DI water (1.7 g), and then held for 20 min.

ME2 obtained above was then added into the flask in the same manner as ME1 over 60 min and the ME2 tank was rinsed by DI water (22.82 g). Then an aqueous APS initiator solution (1.053 g APS in 44.00 g DI water) was added gradually to the flask over a period of 60 min, followed by a rinse of DI water (1.9 g). Upon completing addition, the reaction mixture was held at 80 °C for 10 min. DI water (19.02 g) was charged into the flask. A water solution of t-BHP (10.69 g, 4.58% active) and FF6 (10.41 g, 3.94% active) was then fed into the flask over 30 min followed by cooling to 40 °C and then each tank was rinsed by DI water (3.85 g). Then ADH slurry (14.47 g in 27.76 g DI water) was added at 40 °C over 10 min, followed by a rinse of DI water (3.87 g), and then held for 20 min. The resulting dispersion was cooled to room temperature and filtered to obtain the aqueous polymer dispersion.

Comp Ex 8 Aqueous Multistage Polymer Dispersion (CMP-8)

Preparation of Monomer Emulsion 1 (ME1): Fes-32 surfactant (13.71 g, 31.00% active) was dissolved in DI water (37.05 g) with stirring. Then MMA (253.75 g), a solution of DAAM (2.87 g DAAM dissolved in 35.40 g DI water), MAA (29.23 g), ALMA (2.89 g), A-174 (5.79 g) and BMP (7.70 g) were added into the resultant surfactant solution to obtain ME1.

Preparation of Monomer Emulsion 2 (ME2): P-12A surfactant (6.40 g, 25.00% active) was dissolved in DI water (75.38 g) with stirring. Then EHA (164.86 g), BA (117.13 g), MMA (146.76 g), and a solution of DAAM (4.31 g DAAM in 52.00 g DI water) were added into the resultant surfactant solution to obtain ME2.

A solution containing Fes-32 surfactant (8.61 g, 31.00% active) and DI water (801.04 g) was added into a 4-neck, 5-liter round bottom flask equipped with a thermocouple, a cooling condenser and an agitator, and was heated to 90 °C under $N_2$ atmosphere. An aqueous APS initiator solution (1.40 g APS in 32.44 g DI water), and 3.13% by weight of ME1 obtained above were then added into the flask. Within about 5 min, initiation of polymerization was confirmed by a temperature increase by 3-6°C and a change of the external appearance of the reaction mixture. After heat generation stopped, the aqueous $Na_2CO_3$ solution (0.59 g $Na_2CO_3$ in 20.50 g DI water) was charged into the flask. And then the remaining ME1 was added gradually to the flask over a period of 40 min with stirring. Then the ME1 tank was rinsed by DI water (22.82 g). At the same time, an aqueous APS initiator solution (0.877 g APS in 40 g DI water) was added gradually to the flask over a period of 50 min, followed by a rinse of DI water (1.90 g). The contents of the flask were maintained at 84-86 °C. Ammonia (25% active, 22.51 g) was gradually added into the flask over 15 min to a pH value >8.0, followed by a rinse of DI water (1.7 g), and then held for 20 min.

ME2 obtained above was then added into the flask in the same manner as ME1 over 60 min and the ME2 tank was rinsed by DI water (22.82 g). Then an aqueous APS initiator solution (1.053 g APS in 44.00 g DI water) was added gradually to the flask over a period of 60 min, followed by a rinse of DI water (1.9 g). Upon completing addition, the reaction mixture was held at 80 °C for 10 min. DI water (19.02 g) was charged into the flask. A water solution of t-BHP (10.69 g, 4.58% active) and FF6 (10.41 g, 3.94% active) was then fed into the flask over 30 min followed by cooling to 40 °C and then each tank was rinsed by DI water (3.85 g). Then ADH slurry (3.59 g in 27.76 g DI water) was added at 40 °C over 10 min, followed by a rinse of DI water (3.87 g), and then held for 20 min. The resulting dispersion was cooled to room temperature and filtered to obtain the aqueous polymer dispersion.

Comp Ex 9 Aqueous Multistage Polymer Dispersion (CMP-9)

Preparation of Monomer Emulsion 1 (ME1): Fes-32 surfactant (13.71 g, 31.00% active) was dissolved in DI water (37.05 g) with stirring. Then MMA (246.53 g), a solution of DAAM (10.08 g DAAM dissolved in 35.40 g DI water), MAA (29.23 g), ALMA (2.89 g), and BMP (7.70 g) were added into the resultant surfactant solution to obtain the ME1.

Preparation of Monomer Emulsion 2 (ME2): P-12A surfactant (6.40 g, 25.00% active) was dissolved in DI water (75.38 g) with stirring. Then EHA (164.86 g), BA (117.13 g), MMA (138.39 g), A-174 (5.79 g) and a solution of DAAM (12.95 g DAAM in 52.00 g DI water) were added into the resultant surfactant solution to obtain the ME2.

A solution containing Fes-32 surfactant (8.61 g, 31.00% active) and DI water (801.04 g) was added into a 4-neck,

5-liter round bottom flask equipped with a thermocouple, a cooling condenser and an agitator, and was heated to 90 °C under $N_2$ atmosphere. An aqueous APS initiator solution (1.40 g APS in 32.44 g DI water), and 3.13% by weight of the ME1 obtained above were then added into the flask. Within about 5 min, initiation of polymerization was confirmed by a temperature increase by 3-6°C and a change of the external appearance of the reaction mixture. After heat generation stopped, the aqueous $Na_2CO_3$ solution (0.59 g $Na_2CO_3$ in 20.50 g DI water) was charged into the flask. And then the remaining ME1 was added gradually to the flask over a period of 40 min with stirring. Then the ME1 tank was rinsed by DI water (22.82 g). At the same time, an aqueous APS initiator solution (0.877 g APS in 40 g DI water) was added gradually to the flask over a period of 50 min, followed by a rinse of DI water (1.90 g). The contents of the flask were maintained at 84-86 °C. Ammonia (25% active, 22.51 g) was gradually added into the flask over 15 min to a pH >8.0, followed by a rinse of DI water (1.7 g), and then held for 20 min.

ME2 obtained above was then added into the flask in the same manner as ME1 over 60 min and the ME2 tank was rinsed by DI water (22.82 g). Then an aqueous APS initiator solution (1.053 g APS in 44.00 g DI water) was added gradually to the flask over a period of 60 min, followed by a rinse of DI water (1.9 g). Upon completing addition, the reaction mixture was held at 80 °C for 10 min. DI water (19.02 g) was charged into the flask. A water solution of t-BHP (10.69 g, 4.58% active) and FF6 (10.41 g, 3.94% active) was then fed into the flask over 30 min followed by cooling to 40 °C and then each rinsed by DI water (3.85 g). Then ADH slurry (14.47 g in 27.76 g DI water) was added at 40 °C over 10 min, followed by a rinse of DI water by (3.87 g), and then held for 20 min. The resulting dispersion was cooled to room temperature and filtered to obtain the aqueous polymer dispersion.

Table 1. Monomer compositions for preparing MP and CMP dispersions

| | | Ex 2 | Ex 8 | Ex 9 | Ex 10 | Comp Ex 2 | Comp Ex 4 |
|---|---|---|---|---|---|---|---|
| MP or CMP dispersion | | MP-2 | MP-8 | MP-9 | MP-10 | CMP-2 | CMP-4 |
| ME1 for preparing first polymer (First Monomer Mixture), gram | MMA | 493.05 | 256.61 | 246.53 | 246.53 | 493.05 | 246.53 |
| | ALMA | 5.79 | 2.89 | 2.89 | 2.89 | 5.79 | 2.89 |
| | MAA | 58.46 | 29.23 | 29.23 | 29.23 | 58.46 | 29.23 |
| | DAAM | 20.15 | 0 | 10.08 | 10.08 | 20.15 | 10.08 |
| | A-174 | 11.58 | 5.79 | 4.34 | 7.24 | 5.79 | 5.79 |
| BMP in ME1, gram | | 15.39 | 7.70 | 7.70 | 7.70 | 15.39 | 7.69 |
| ME2 for preparing second polymer (Second Monomer Mixture), gram | MMA | 346.00 | 138.39 | 138.39 | 138.39 | 346.00 | 134.07 |
| | EHA | 329.71 | 164.86 | 164.86 | 164.86 | 329.71 | 164.86 |
| | DAAM | 25.90 | 12.95 | 12.95 | 12.95 | 25.90 | 12.95 |
| | MAA | 0 | 0 | 0 | 0 | 0 | 4.38 |
| | BA | 164.84 | 117.13 | 117.13 | 117.13 | 164.84 | 117.13 |
| ADH, gram | | 28.95 | 6.47 | 14.47 | 14.47 | 28.95 | 14.47 |

The as prepared aqueous multistage polymer dispersions (MP and CMP dispersions) were characterized according to the test methods below. Properties and characterization results of these dispersions prepared above were given in Table 2.

Solids Content Measurement

Determine solids content by weighting 0.7±0.1 g of a sample (wet weight of the sample is denoted as "W1"), putting the sample into an aluminum pan (weight of aluminum pan is denoted as "W2") in an oven at 150°C for 25 min, and then cooling and weighting the aluminum pan with the dried sample with total weight denoted as "W3". "W3-W2" refers to dry or solids weight of the sample. The solids content is calculated by (W3-W2)/W1*100%.

Particle Size Measurement

Determine particle size of polymer particles in an aqueous dispersion by using Brookhaven BI-90 Plus Particle Size Analyzer, which employs the technique of photon correlation spectroscopy (light scatter of sample particles). This method involved diluting 2 drops of an aqueous dispersion to be tested in 20 mL of 0.01 M sodium chloride (NaCl) solution,

and further diluting the resultant mixture in a sample cuvette to achieve a desired count rate (K) (e.g., K ranging from 250 to 500 counts/sec for diameter in a range of 10-300 nm). Then the particle size was measured and reported as a Z-average diameter by intensity.

Minimum Film Formation Temperature (MFFT) Measurement

Determine MFFT by using a Coesfeld MFFT instrument. The MFFT was measured by casting a 75 μm wet film of an aqueous dispersion sample on a heating plate with gradient temperature. The film was dried and the minimum temperature at which a coherent film is formed is recorded as the MFFT.

Viscosity Measurement

Determine viscosities by using Brookfield viscometer LVDV-I Prime at 25 °C according to the following parameters: LV Spindle #1, 60 revolutions per minute (RPM), 10 - 100 centipoises (cP); LV Spindle #2, 60 RPM, 50 - 500 cP; LV Spindle #3, 60 RPM, 200 - 2000 cP; and LV Spindle #4, 60 RPM, 1000 - 10000 cP.

Wet Coagulum Content Measurement

Determine wet coagulum content of an aqueous dispersion sample by weighting 500 g of the sample (wet weight of the sample is denoted as "W1") and then filtering the sample through a 325 mesh (44 micrometers (μm)) sieve, followed by adding DI water (100 g) to the sieve. The residue remaining on the sieve were collected and weighted as "W2". The wet coagulum content is calculated by (W2/W1)*100%. The acceptable wet coagulum content is < 400 ppm when sieving with 325 mesh. The lower the wet coagulum content, the more stable polymerization process in preparing the aqueous dispersion.

Table 2. Properties and characterization of MP and CMP Dispersions

| | Dispersion | Tg of first polymer// Tg of second polymer (°C) | MFFT (°C) | pH | Solid (%) | Viscosity (cP) | Particle size (nm) | Wet coagulum content (ppm) |
|---|---|---|---|---|---|---|---|---|
| Ex 1 | MP-1 | 87.69//-7.74 | <10 | 8.62 | 36.65 | 464 | 114 | <100 |
| Ex 2 | MP-2 | 87.69//2.5 | <10 | 8.50 | 37.5 | 899 | 121 | <100 |
| Ex 3 | MP-3 | 84.9//-7.74 | 32.8 | 8.58 | 34.84 | 16 | 61 | <100 |
| Ex 4 | MP-4 | 87.69//-7.74 | 14.9 | 8.21 | 35.09 | 870 | 346 | <100 |
| Ex 5 | MP-5 | 85.75//2.5 | <10 | 7.96 | 34.81 | 1470 | 216 | <100 |
| Ex 6 | MP-6 | 91.38//-7.74 | 17.8 | 7.99 | 30.23 | 30000 | 128 | <100 |
| Ex 7 | MP-7 | 87.69//-7.8 | <10 | 8.13 | 36.18 | 5400 | 417 | <100 |
| Ex 8 | MP-8 | 87.62//-7.74 | 14.8 | 8.27 | 36.21 | 2871 | 365 | <100 |
| Ex 9 | MP-9 | 88.05//-7.74 | <10 | 8.37 | 36.23 | 1916 | 384 | <100 |
| Ex 10 | MP-10 | 87.27//-7.74 | 14.8 | 8.24 | 32.1 | 3719 | 370 | <100 |
| Comp Ex 1 | CMP-1 | 88.54//-7.74 | <10 | 8.55 | 40.14 | 305 | 67 | <100 |
| Comp Ex 2 | CMP-2 | 88.57//2.5 | <10 | 8.46 | 39.92 | 846 | 89 | <100 |
| Comp Ex 3 | CMP-3 | -7.74//87.69 | <10 | 8.49 | 36.32 | 740 | 103 | 862 |
| Comp Ex 4 | CMP-4 | 87.69//-7.02 | <10 | 7.65 | 35.78 | 1140 | 90 | <100 |
| Comp Ex 5 | CMP-5 | 87.69//-7.74 | <10 | 8.01 | 36.18 | 33 | 67 | 350 |
| Comp Ex 6 | CMP-6 | 94.98//-7.74 | <10 | 7.72 | 29.13 | 6000 | 186 | <100 |
| Comp Ex 7 | CMP-7 | 84.18//-7.74 | 32 | 8.78 | 36.2 | 17 | 62 | <100 |
| Comp Ex 8 | CMP-8 | 87.64//-7.78 | <10 | 8.12 | 34.21 | 1168 | 343 | <100 |

(continued)

| | Dispersion | Tg of first polymer// Tg of second polymer (°C) | MFFT (°C) | pH | Solid (%) | Viscosity (cP) | Particle size (nm) | Wet coagulum content (ppm) |
|---|---|---|---|---|---|---|---|---|
| Comp Ex 9 | CMP-9 | 89.44//-7.64 | 17.8 | 8.36 | 36.17 | 118 | 320 | <100 |
| *Values of Tg were calculated according to the equation (I) described above.* | | | | | | | | |

Coating Composition Samples

The aqueous dispersions (MP and CMP dispersions) obtained above were used as binders for preparing coating composition samples based on formulations given in Table 3. Types and formulations of the binders is given in Table 4. The binder, DOWANOL DPM coalescent, DPnB, TS-100 matting agent, BYK-346 wetting agent, TEGO Airex 902W defoamer, ACRYSOL RM-8W rheology modifier, ACRYSOL RM-5000 rheology modifier, and water were mixed and stirred at 600 RPM to obtain the samples.

Table 3. Formulations for Coating Composition Samples

| Coating Composition | IEs 1, 2, 5, 7, and 9, CEs 3-5 and 8 | CE1 and CE2 | CE6 | IE4 and IE8 | IE6 | IE10 | CE9 | IE3 and CE7 |
|---|---|---|---|---|---|---|---|---|
| Binder | 78 | 70 | 93 | 80 | 93 | 88 | 78 | 78 |
| DOWANOL DPM | 0.5 | 0.5 | 0.5 | 1 | 1 | 0.7 | 0.5 | 2 |
| DOWANOL DPnB | 1 | 1 | 1 | 1 | 1 | 1.5 | 2 | 2.5 |
| TS-100 | 1.5 | 1.5 | 1.5 | 1.5 | 1.5 | 1.5 | 1.5 | 1.5 |
| BYK-346 | 0.5 | 0.5 | 0.5 | 0.5 | 0.5 | 0.5 | 0.5 | 0.5 |
| TEGO Airex 902W | 0.3 | 0.3 | 0.3 | 0.3 | 0.3 | 0.3 | 0.3 | 0.3 |
| ACRYSOL RM-8W | 0.5 | 0.5 | 0.5 | 0.5 | 0.5 | 0.5 | 0.5 | 0.5 |
| ACRYSOL RM-5000 | 0.5 | 0.5 | 0.5 | 0.5 | 0.5 | 0.5 | 0.5 | 0.5 |
| Water | 17.2 | 17.2 | 2.2 | 14.7 | 2.2 | 6.5 | 16.2 | 14.2 |
| *Total* | 100 | 100 | 100 | 100 | 100 | 100 | 100 | 100 |
| *Solid* | 0.28 | 0.28 | 0.28 | 0.28 | 0.28 | 0.28 | 0.28 | 0.28 |

The obtained coating composition samples were evaluated according to the test methods described below and results of properties and characterization are shown in Tables 4 and 5.

Water Resistance and Alcohol Resistance

Determine water resistance and alcohol resistance according to GB/T 4893.1-2005 standard for Furniture - Assessment of Surface Resistance to Cold Liquids.

Preparation of coated panels: Wood substrate was applied with two-layer coatings by applying 80-90 g/m$^2$ of a test coating composition for each layer. After the first coating, panels were left at room temperature for 4 hours and then sanded with sanding paper. After the second coat, panels were allowed to dry at room temperature for 4 hours, and then placed in an oven at 50 °C for 48 hours to give coated panels for water resistance and alcohol resistance tests below: For the water resistance test, filter discs were first saturated with water, placed on the above coated panels, and covered with a cap to reduce evaporation. After 24 hours, the cap was removed. Tested areas were wiped with wet facial tissues and allowed to dry at room temperature to observe the degree of damage as defined below.

For the alcohol resistance test, filter discs were saturated with an aqueous ethanol solution (48%), placed on the above coated panels, and covered with a cap to reduce evaporation. After 1 hour, the cap was removed. Tested areas were wiped with wet facial tissues and allowed to dry at room temperature to observe the degree of damage as defined below.

The degree of damage for the water resistance and alcohol resistance tests, respectively, is rated as the scale of 0-5, where 0 is the worst, and 5 is the best, as follows:

5 - No change: Test area indistinguishable from adjacent surrounding area;

4 - Minor change: Test area distinguishable from adjacent surrounding area, only when the light source is directed on the test surface and reflected towards the observer's eye. The minor change could be some slight discoloration and change in gloss, but no change in the surface structure such as swelling, fiber raising, cracking and/or blistering;

3 - Moderate change: Test area distinguishable from adjacent surrounding area, visible in several viewing directions, for example, discoloration; change in gloss and color; but no change in the surface structure such as swelling, fiber raising, cracking and/or blistering;

2 - Significant change: Test area clearly distinguishable from adjacent surrounding area, visible in all viewing directions, for example, discoloration; change in gloss and color; and/or slightly change in the surface structure such as swelling, fiber raising, cracking and/or blistering.

1 - Strong change: The structure of the surface being distinctly changed and/or discoloration, change in gloss and color, and/or the surface material being totally or partially removed, and/or the filter paper adhering to the surface.

The higher the rating level, the better the resistance. Acceptable water resistance is 4 or higher. Acceptable alcohol resistance is 4 or higher.

Pencil Hardness

Determine pencil hardness on coatings made as disclosed below on a glass substrate, according GB/T 23999-2009 standard for Water based Coating for Woodenware for Indoor Decorating and Refurbishing (Hardness section - GB/T 6739). Test coating compositions were first drawn down on a glass substrate at a wet thickness of 120 μm, dried at room temperature (23±2 °C) for 20 min, and then further dried at 50°C for 2 days. The resultant coating films were used for pencil hardness testing. The hardness of the hardest pencil lead that does not leave a mark on the coating films is recorded as the pencil hardness. A pencil hardness of 2B or harder is acceptable.

Early Block Resistance

Determine early block resistance according to GB/T 23982- 2009 standard for Block Resistance of Wood Coating. A first layer of an aqueous coating composition to be tested was brushed onto a wood panel (7cm x 5cm) at 80-90 grams per square meter ($g/m^2$) of the wood panel, dried at 50°C for 60 min, and then cooled to room temperature, followed by sanding with sand paper. Then a second layer of the coating composition was brushed onto the coated wood block at 80-90 $g/m^2$ and Dried at 40 °C for 30 min, and then cooled to room temperature. Two coated wood blocks were then stacked together face to face with 2 kg (kilograms) weight on them and were placed into an oven at 50°C for 4 hours. Then, the 2 kg weight was removed, and the two stacked wood blocks were balanced at room temperature for 1 hour. The two stacked wood blocks were then separated from each other to evaluate the early block resistance.

The rating of the early block resistance property is defined by the separating force and the area of damaging: Separating force: A= Separated freely; B= Separate after a light knock; C= Separate after applying a light pull force; D= Separate after applying moderate pull force; E= Separate after applying maximum pull force; F= Separate by using tools.

The number means area of damage:

0: No damage; 1: <1%; 2: 1%-5%; 3: 6%-20%; 4: 21%-50%; 5: >50%.

A-0 is the best, F-5 is the worst. The early block resistance should be C-0 or better to be acceptable.

As shown in Table 4, MP-1 through MP-10 dispersions as binder all provided coating composition samples IE1 to IE 10, respectively, with acceptable properties of water resistance, alcohol resistance, pencil hardness, and early block resistance properties.

In contrast, as shown in Table 5, CMP-1 dispersion prepared in the absence of ALMA in the first stage of polymerization failed to provide coatings with acceptable alcohol resistance (CE1). CMP-2 dispersion prepared by using 1% of A-174 (relative to the first polymer weight) in the first-stage polymerization provided unacceptable alcohol resistance (CE2). CMP-3 dispersion prepared by reversed stages in polymerization failed both requirements of water and alcohol resistance properties (CE3). CMP-4 prepared by using 1% of MAA (relative to the second polymer) in the second stage provided coatings with both unacceptable water and alcohol resistance (CE4). CMP-5 dispersion prepared with neutralization to pH =7.08 after the first stage of polymerization failed all three requirements of water, alcohol resistance and early block resistance properties (CE5). CMP-6 dispersion using 20% of MAA in the first stage of multistage polymerization failed to provide acceptable alcohol resistance for the coating composition sample of CE6. CE7 sample comprising CMP-7 dispersion prepared by using 5% of MAA in the first stage didn't provide acceptable water resistance. CMP-8 dispersion prepared by using 1% of DAAM based on total monomer weight provided unacceptable alcohol resistance for the sample of CE8. CMP-9 dispersion prepared by using no A-174 in the first stage of multistage polymerization while using 1.32% of A-174 (relative to the second polymer weight) in the second stage of multistage polymerization afforded coatings with unacceptable alcohol resistance and early block resistance (CE9).

Table 4. Properties and characterization of coating composition samples IE1 to IE10

| Coating Composition | IE 1 | IE 2 | IE 3 | IE 4 | IE 5 | IE 6 | IE 7 | IE 8 | IE 9 | IE 10 |
|---|---|---|---|---|---|---|---|---|---|---|
| Binder (Dispersion) | MP-1 | MP-2 | MP-3 | MP-4 | MP-5 | MP-6 | MP-7 | MP-8 | MP-9 | MP-10 |
| Pencil hardness | B | B | B | HB | 2B | HB | HB | HB | B | B |
| Water resistance | 4 | 4 | 4 | 4 | 4 | 4 | 4 | 4 | 4 | 4 |
| Alcohol resistance | 4 | 4 | 4 | 4 | 4 | 4 | 4 | 4 | 4 | 4 |
| Early block resistance | B-0 | B-0 | B-0 | B-1 | A-0 | C-0 | A-0 | A-0 | A-0 | B-0 |

Table 5. Properties and characterization of coating composition samples CE1 to CE9

| Coating Composition | CE1 | CE2 | CE3 | CE4 | CE5 | CE6 | CE 7 | CE8 | CE9 |
|---|---|---|---|---|---|---|---|---|---|
| Binder (Dispersion) | CMP-1 | CMP-2 | CMP-3 | CMP-4 | CMP-5 | CMP-6 | CMP-7 | CMP-8 | CMP-9 |
| Pencil Hardness | HB | B | 2B | 2B | B | B | B | HB | HB |
| Water resistance | 4 | 4 | 3 | 3 | 2 | 4 | 3 | 4 | 4 |
| Alcohol resistance | 3 | 3 | 2 | 2 | 2 | 2 | 4 | 2 | 2 |
| Early block resistance | B-0 | B-0 | A-0 | A-0 | D-1 | A-0 | C-0 | A-0 | D-1 |

**Claims**

**1.** An aqueous dispersion comprising multistage polymeric particles and optionally a polyfunctional carboxylic hydrazide containing at least two hydrazide groups per molecule,

wherein the multistage polymeric particles are prepared by a multistage free-radical polymerization process comprising: (i) preparing a first polymer by a free-radical polymerization, followed by neutralizing the first polymer to a pH value of greater than 7.1; and (ii) preparing a second polymer in the presence of the neutralized first polymer obtained from step (i), to obtain the multistage polymeric particles comprising the first polymer and the second polymer at a weight ratio of the first polymer to the second polymer of from 27:73 to 60:40;
wherein the first polymer comprises, by weight based on the weight of the first polymer,
from 6% to 18% of structural units of an acid monomer, a salt thereof, or mixtures thereof;
from 1.1% to 5% of structural units of a monoethylenically unsaturated silane functional monomer;
from zero to 10% of structural units of diacetone (meth)acrylamide;
greater than 0.5% of structural units of a multifunctional monomer containing two or more different ethylenically unsaturated polymerizable groups, and
60% or more of structural units of an additional monoethylenically unsaturated nonionic monomer selected from a $C_1$ to $C_2$ alkyl ester of (meth)acrylic acid, a hydroxyalkyl (meth)acrylate, or mixtures thereof;
wherein the second polymer comprises, by weight based on the weight of the second polymer,
from zero to less than 0.5% of structural units of an acid monomer, a salt thereof, or mixtures thereof;
from zero to 10% of structural units of diacetone (meth)acrylamide; and
structural units of a monoethylenically unsaturated nonionic monomer that does not bear an ionic charge between pH=1-14 and that is other than the diacetone (meth)acrylamide; and
wherein the second polymer has a glass transition temperature of from -25 to 10 °C, and the first polymer has a glass transition temperature of at least 50 °C higher than that of the second polymer; where values of the glass transition temperature are calculated according to the following equation (I),

$$Tg(P_M) = w(M_1) * Tg(M_1) + w(M_2) * Tg(M_2) \quad (I)$$

wherein $Tg(P_M)$ is the glass transition temperature of a polymer in the multistage polymeric particles, $w(M_1)$ is the weight fraction of monomer $M_1$ in such polymer in the multistage polymeric particles, $w(M_2)$ is the weight fraction of monomer $M_2$ in such polymer in the multistage polymeric particles, $T_g(M_1)$ is the linear glass transition temperature of the homopolymer of monomer $M_1$, and $T_g(M_2)$ is the linear glass transition temperature of the homopolymer of monomer $M_2$, all temperatures being in K;
provided that at least one of the first polymer and the second polymer comprises structural units of the diacetone

(meth)acrylamide and the total concentration of structural units of the diacetone (meth)acrylamide is 1.1% or more, by weight based on the weight of the multistage polymeric particles.

2. The aqueous dispersion of claim 1, wherein the multifunctional monomer is selected from allyl (meth)acrylate, allyl (meth)acrylamide, allyl oxyethyl (meth)acrylate, crotyl (meth)acrylate, dicyclopentenyl (meth)acrylate, dicyclopentenyl ethyl(meth)acrylate, diallyl maleate, or mixtures thereof.

3. The aqueous dispersion of claim 1 or 2, wherein structural units of the diacetone (meth)acrylamide are present at a total concentration of from 1.2% to 3.5%, by weight based on the weight of the multistage polymeric particles.

4. The aqueous dispersion of any one of claims 1-3, wherein the multistage polymeric particles comprise structural units of the monoethylenically unsaturated silane functional monomer at a total concentration of 0.55% to 1.5%, by weight based on the weight of the multistage polymeric particles.

5. The aqueous dispersion of any one of claims 1-4, wherein the first polymer comprises from 0.8% to 3% of structural units of the multifunctional monomer, by weight based on the weight of the first polymer.

6. The aqueous dispersion of any one of claims 1-5, wherein the monoethylenically unsaturated silane functional monomer is selected from a vinyl silane having the structure of formula (II), a (meth)acryl functional silane having the structure of formula (III), or combinations thereof,

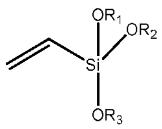
(II)

where $R_1$, $R_2$ and $R_3$ are each independently selected from $CH_3$, $CH_2CH_3$, $CH_2CH_2CH_3$, $CH(CH_3)_2$, $CH_2CH_2CH_2CH_3$ or its isomers, or combinations thereof;

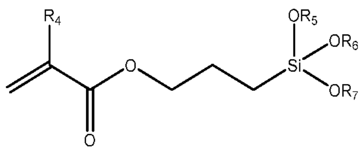
(III)

where $R_4$ is H or $CH_3$, $R_5$, $R_6$ and $R_7$ are each independently selected from $CH_3$, $CH_2CH_3$, $CH_2CH_2CH_3$, $CH(CH_3)_2$, $CH_2CH_2CH_2CH_3$ or its isomers, or combinations thereof.

7. The aqueous dispersion of any one of claims 1-6, wherein the polyfunctional carboxylic hydrazide is selected from adipic dihydrazide, oxalic dihydrazide, isophthalic dihydrazide, polyacrylic polyhydrazide, or mixtures thereof.

8. A process for preparing the aqueous dispersion of any one of claims 1-7 by multistage free-radical polymerization, comprising:

(i) preparing the first polymer by free-radical polymerization, followed by neutralizing the first polymer to a pH value of greater than 7.1;
(ii) preparing the second polymer by free-radical polymerization, in the presence of the neutralized first polymer obtained from step (i), to obtain the multistage polymeric particles, and optionally,

admixing the multistage polymeric particles with a polyfunctional carboxylic hydrazide containing at least two hydrazide groups per molecule.

9. An aqueous coating composition comprising the aqueous dispersion of any one of claims 1-7.

## Patentansprüche

1. Wässrige Dispersion, umfassend mehrstufige Polymerpartikel und optional ein polyfunktionelles Carbonsäurehydrazid, das mindestens zwei Hydrazidgruppen pro Molekül enthält,

   wobei die mehrstufigen Polymerpartikel durch ein mehrstufiges Radikalkettenpolymerisationsverfahren hergestellt werden, umfassend: (i) Herstellen eines ersten Polymers durch eine Radikalkettenpolymerisation, gefolgt von einem Neutralisieren des ersten Polymers auf einen pH-Wert von über 7,1; und (ii) Herstellen eines zweiten Polymers in der Gegenwart des neutralisierten ersten Polymers, das aus Schritt (i) erhalten wird, um die mehrstufigen Polymerpartikel zu erhalten, umfassend das erste Polymer und das zweite Polymer in einem Gewichtsverhältnis des ersten Polymers zu dem zweiten Polymer von 27 : 73 bis 60 : 40;
   wobei das erste Polymer, in Gewichtsprozent, basierend auf dem Gewicht des ersten Polymers, umfasst,
   von zu 6 Gew.-% bis 18 Gew.-% Struktureinheiten eines Säuremonomers, eines Salzes davon, oder Mischungen davon;
   von zu 1,1 Gew.-% bis 5 Gew.-% Struktureinheiten eines monoethylenisch ungesättigten Silan-funktionellen Monomers;
   von zu null bis 10 Gew.-% Struktureinheiten von Diaceton(meth)acrylamid;
   mehr als 0,5 Gew.-% Struktureinheiten eines multifunktionellen Monomers, das zwei oder mehr unterschiedliche ethylenisch ungesättigte polymerisierbare Gruppen enthält, und
   60 % oder mehr Struktureinheiten eines zusätzlichen monoethylenisch ungesättigten nichtionischen Monomers, das aus einem $C_1$- bis $C_2$-Alkylester der (Meth)acrylsäure, einem Hydroxyalkyl(meth)acrylat oder Mischungen davon ausgewählt ist;
   wobei das zweite Polymer, in Gewichtsprozent, basierend auf dem Gewicht des zweiten Polymers, umfasst,
   von zu null bis weniger als 0,05 Gew.-% Struktureinheiten eines Säuremonomers, eines Salzes davon, oder Mischungen davon;
   von zu null bis 10 Gew.-% Struktureinheiten von Diaceton(meth)acrylamid; und
   Struktureinheiten eines monoethylenisch ungesättigten nichtionischen Monomers, das zwischen pH=1-14 keine ionische Ladung trägt und das ein anderes als das Diaceton(meth)acrylamid ist; und
   wobei das zweite Polymer eine Glasübergangstemperatur von -25 bis 10 °C aufweist und das erste Polymer eine Glasübergangstemperatur von mindestens 50 °C höher als die des zweiten Polymers aufweist; wobei die Werte der Glasübergangstemperatur nach der folgenden Gleichung (I) berechnet werden,

   $$Tg(P_M) = w(M_1) * Tg(M_1) + w(M_2) * Tg(M_2) \quad (I)$$

   wobei $Tg(P_M)$ die Glasübergangstemperatur eines Polymers in den mehrstufigen Polymerpartikeln ist, $w(M_1)$ der Gewichtsanteil des Monomers $M_1$ in einem solchen Polymer in den mehrstufigen Polymerpartikeln ist, $w(M_2)$ der Gewichtsanteil des Monomers $M_2$ in einem solchen Polymer in den mehrstufigen Polymerpartikeln ist, $T_g(M_1)$ die lineare Glasübergangstemperatur des Homopolymers des Monomers $M_1$ ist, und $T_g(M_2)$ die lineare Glasübergangstemperatur des Homopolymers des Monomers $M_2$ ist, wobei alle Temperaturen in K sind;
   vorausgesetzt, dass mindestens eines des ersten Polymers und des zweiten Polymers Struktureinheiten des Diaceton(meth)acrylamids umfasst und die Gesamtkonzentration der Struktureinheiten des Diaceton(meth)acrylamids 1,1 Gew.-% oder mehr beträgt, basierend auf dem Gewicht der mehrstufigen Polymerpartikel.

2. Wässrige Dispersion nach Anspruch 1 , wobei das multifunktionelle Monomer aus Allyl(meth)acrylat, Allyl(meth)acrylamid, Allyloxyethyl(meth)acrylat, Crotyl(meth)acrylat, Dicyclopentenyl(meth)acrylat, Dicyclopentenylethyl(meth)acrylat, Diallylmaleat oder Mischungen davon ausgewählt ist.

3. Wässrige Dispersion nach Anspruch 1 oder 2, wobei Struktureinheiten des Diaceton(meth)acrylamids in einer Gesamtkonzentration von 1,2 Gew.-% bis 3,5 Gew.-%, basierend auf dem Gewicht der mehrstufigen Polymerpartikel, vorhanden sind.

4. Wässrige Dispersion nach einem der Ansprüche 1 bis 3, wobei die mehrstufigen Polymerpartikel Struktureinheiten des monoethylenisch ungesättigten Silan-funktionellen Monomers bei einer Gesamkonzentration von 0,55 Gew.-% bis 1,5 Gew.-%, basierend auf dem Gewicht der mehrstufigen Polymerpartikel, umfassen.

5. Wässrige Dispersion nach einem der Ansprüche 1 bis 4, wobei das erste Polymer von 0,8 Gew.-% bis 3 Gew.-% Struktureinheiten des multifunktionellen Monomers, basierend auf dem Gewicht des ersten Polymers, umfasst.

6. Wässrige Dispersion nach einem der Ansprüche 1 bis 5, wobei das monoethylenisch ungesättigte Silan-funktionelle Monomer aus einem Vinylsilan, das die Struktur von Formel (II) aufweist, einem (Meth)acryl-funktionellen Silan, das die Struktur von Formel (III) aufweist, oder Kombinationen davon ausgewählt ist,

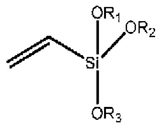
(II)

wobei $R_1$, $R_2$ und $R_3$ jeweils unabhängig aus $CH_3$, $CH_2CH_3$, $CH_2CH_2CH_3$, $CH(CH_3)_2$, $CH_2CH_2CH_2CH_3$ oder seinen Isomeren oder Kombinationen davon ausgewählt sind;

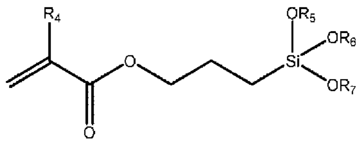
(III)

wobei $R_4$ H oder $CH_3$ ist, $R_5$, $R_6$ und $R_7$ jeweils unabhängig aus $CH_3$, $CH_2CH_3$, $CH_2CH_2CH_3$, $CH(CH_3)_2$, $CH_2CH_2CH_2CH_3$ oder seinen Isomeren oder Kombinationen davon ausgewählt sind.

7. Wässrige Dispersion nach einem der Ansprüche 1 bis 6, wobei das polyfunktionelle Carbonsäurehydrazid aus Adipinsäuredihydrazid, Oxalsäuredihydrazid, Isophthalsäuredihydrazid, Polyacrylsäurepolyhydraziden oder Mischungen davon ausgewählt ist.

8. Verfahren zum Herstellen der wässrigen Dispersion nach einem der Ansprüche 1 bis 7 durch mehrstufige Radikalkettenpolimerisation, umfassend:

(i) Herstellen des ersten Polymers durch Radikalkettenpolimerisation, gefolgt von dem Neutralisieren des ersten Polymers auf einen pH-Wert von über 7,1;
(ii) Herstellen des zweiten Polymers durch Radikalkettenpolimerisation in der Gegenwart des neutralisierten ersten Polymers, das aus Schritt (i) erhalten wird, um die mehrstufigen Polymerpartikel zu erhalten; und optional,

Vermischen mehrstufigen Polymerpartikel mit einem polyfunktionellen Carbonsäurehydrazid, das mindestens zwei Hydrazidgruppen pro Molekül enthält.

9. Wässrige Beschichtungszusammensetzung, umfassend die wässrige Dispersion nach einem der Ansprüche 1 bis 7.

## Revendications

1. Dispersion aqueuse comprenant des particules polymériques multiphasées et éventuellement un hydrazide carboxylique polyfonctionnel contenant au moins deux groupes hydrazide par molécule.

dans laquelle les particules polymériques multiphasées sont préparées par un procédé de polymérisation radicalaire multiphasée comprenant : (i) la préparation d'un premier polymère par une polymérisation radicalaire, suivie d'une neutralisation du premier polymère à un pH supérieur à 7,1 ; et (ii) la préparation d'un second polymère en présence du premier polymère neutralisé obtenu à l'étape (i), pour obtenir les particules polymériques multiphasées comprenant le premier polymère et le second polymère à un rapport pondéral du premier polymère au second polymère de 27:73 à 60:40 ;
dans laquelle le premier polymère comprend, en poids en fonction du poids du premier polymère,
de 6 % à 18 % de motifs structuraux d'un monomère d'acide, d'un sel de celui-ci, ou de mélanges de ceux-ci ;
de 1,1 % à 5 % de motifs structuraux d'un monomère fonctionnel silane à insaturation monoéthylénique ;
de zéro à 10 % de motifs structuraux de diacétone (méth)acrylamide ;
plus de 0,5 % de motifs structuraux d'un monomère multifonctionnel contenant deux groupes polymérisables à instauration éthylénique différents ou plus, et

60 % ou plus de motifs structuraux d'un monomère non ionique supplémentaire à insaturation monoéthylénique choisi parmi un ester d'alkyle $C_1$ à $C_2$ d'acide (méth)acrylique, un (méth)acrylate d'hydroxyalkyle ou des mélanges de ceux-ci ;

dans laquelle le second polymère comprend, en poids en fonction du poids du second polymère,
de zéro à moins de 0,5 % de motifs structuraux d'un monomère d'acide, d'un sel de celui-ci, ou de mélanges de ceux-ci ;
de zéro à 10 % de motifs structuraux de diacétone (méth)acrylamide ; et
des motifs structuraux d'un monomère non ionique à insaturation monoéthylénique qui ne porte pas de charge ionique entre pH=1-14 et qui est autre que le diacétone (méth)acrylamide ; et
dans laquelle le second polymère a une température de transition vitreuse de -25 à 10 °C, et le premier polymère a une température de transition vitreuse supérieure d'au moins 50 °C à celle du second polymère ; où les valeurs de la température de transition vitreuse sont calculées selon l'équation suivante (I),

$$Tg(P_M) = w(M_1) * Tg(M_1) + w(M_2) * Tg(M_2) \quad (I)$$

où $Tg(P_M)$ est la température de transition vitreuse d'un polymère dans les particules polymérique multiphasées, $w(M_1)$ est la fraction pondérale du monomère $M_1$ dans un tel polymère dans les particules polymériques multiphasées, $w(M_2)$est la fraction pondérale du monomère $M_2$ dans un tel polymère dans les particules polymériques multiphasées, $T_g(M_1)$ est la température de transition vitreuse linéaire de l'homopolymère du monomère $M_1$, et $T_g(M_2)$ est la température de transition vitreuse linéaire de l'homopolymère du monomère $M_2$, toutes les températures étant en K ;
à condition qu'au moins l'un parmi le premier polymère et le second polymère comprenne des motifs structuraux du diacétone (méth)acrylamide et que la concentration totale de motifs structuraux du diacétone (méth) acrylamide soit supérieure ou égale à 1,1 %, en poids en fonction du poids des particules polymériques multiphasées.

**2.** Dispersion aqueuse selon la revendication 1, dans laquelle le monomère multifonctionnel est choisi parmi un (méth) acrylate d'allyle, un (méth)acrylamide d'allyle, un (méth)acrylate d'oxyéthyle et d'allyle, un (méth)acrylate de crotyle, un (méth)acrylate de dicyclopentényle, un éthyl(méth)acrylate de dicyclopentényle, un maléate de diallyle, ou des mélanges de ceux-ci.

**3.** Dispersion aqueuse selon la revendication 1 ou 2, dans laquelle les motifs structuraux du diacétone (méth)acrylamide sont présents à une concentration totale de 1,2 % à 3,5 %, en poids en fonction du poids des particules polymériques multiphasées.

**4.** Dispersion aqueuse selon l'une quelconque des revendications 1 à 3, dans laquelle les particules polymériques multiphasées comprennent des motifs structuraux du monomère fonctionnel silane à insaturation monoéthylénique à une concentration totale allant de 0,55 % à 1,5 %, en poids en fonction du poids des particules polymériques multiphasées.

**5.** Dispersion aqueuse selon l'une quelconque des revendications 1 à 4, dans laquelle le premier polymère comprend 0,8 % à 3 % de motifs structuraux du monomère multifonctionnel, en poids en fonction du poids du premier polymère.

**6.** Dispersion aqueuse selon l'une quelconque des revendications 1 à 5, dans laquelle le monomère fonctionnel silane à insaturation monoéthylénique est choisi parmi un silane vinylique ayant la structure de la formule (II), un silane fonctionnel (méth)acrylique ayant la structure de la formule (III), ou des combinaisons de ceux-ci,

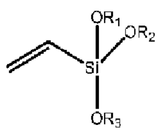
(II)

où $R_1$, $R_2$ et $R_3$ sont chacun indépendamment choisis parmi $CH_3$, $CH_2CH_3$, $CH_2CH_2CH_3$, $CH(CH_3)_2$, $CH_2CH_2CH_2CH_3$ ou ses isomères, ou leurs combinaisons ;

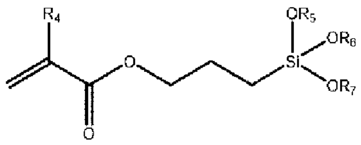

(III)

où $R_4$ est H ou $CH_3$, $R_5$, $R_6$ et $R_7$ sont chacun indépendamment choisis parmi $CH_3$, $CH_2CH_3$, $CH_2CH_2CH_3$, $CH(CH_3)_2$, $CH_2CH_2CH_2CH_3$ ou ses isomères, ou leurs combinaisons.

7. Dispersion aqueuse selon l'une quelconque des revendications 1 à 6, dans laquelle l'hydrazide carboxylique polyfonctionnel est choisi parmi un dihydrazide adipique, un dihydrazide oxalique, un dihydrazide isophtalique, un polyhydrazide polyacrylique, ou des mélanges de ceux-ci.

8. Procédé de préparation de la dispersion aqueuse selon l'une quelconque des revendications 1 à 7 par polymérisation radicalaire multiphasée, comprenant :

(i) la préparation du premier polymère par polymérisation radicalaire, suivie d'une neutralisation du premier polymère à un pH supérieur à 7,1 ;
(ii) la préparation du second polymère par polymérisation radicalaire, en présence du premier polymère neutralisé obtenu à l'étape (i), pour obtenir les particules polymériques multiphasées ; et facultativement,

le mélange des particules polymériques multiphasées avec un hydrazide carboxylique polyfonctionnel contenant au moins deux groupes hydrazide par molécule.

9. Composition aqueuse de revêtement comprenant la dispersion aqueuse selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB T239822009 A
- US 2021292455 A1
- GB T489312005 A
- GB T239992009 A
- GB T6739 A


### Non-patent literature cited in the description


- AMINOION™ RE1000 surfactant (RE1000) (30%-31% active). Nippon Nyukazai Co., Ltd.